# EUROPEAN PATENT APPLICATION

(11) **EP 4 811 863 A1**
(43) Date of publication of application: **23.09.2026**
(21) Application number: 24904434.8
(22) Date of filing: 13.12.2024
(51) Int. Cl.: H04W 36/00, H04W 36/36, H04W 24/02

(54) **METHOD FOR PROCESSING SUBSEQUENT PSCELL CHANGE AND ADDITION CONFIGURATION DURING MOBILE OPERATION IN NEXT GENERATION MOBILE COMMUNICATION SYSTEM**

(30) Priority: 13.12.2023 KR 20230181020; 15.02.2024 KR 20240022089
(71) Applicant: Samsung Electronics Co., Ltd., Suwon-si, Gyeonggi-do 16677 (KR)
(72) Inventor: HWANG, June, Suwon-si, Gyeonggi-do 16677 (KR); JIN, Seungri, Suwon-si, Gyeonggi-do 16677 (KR)
(74) Representative: Nederlandsch Octrooibureau
(86) International application number: PCT/KR2024/096934
(87) International publication number: WO 2025/127869

(57) **Abstract**

The present disclosure relates to a 5G communication or 6G communication system for supporting higher data transmission rates, and relates to a method and device for deleting a subsequent PSCell change and addition (SCPAC) configuration which is no longer valid when SCPAC configuration information previously received by a terminal is no longer valid.

## Description

### [Technical Field]

The disclosure relates to the operation of a base station and a user equipment (UE) in a mobile communication system. More particularly, the disclosure relates to a method and device for processing subsequent conditional primary cell group (SCG) cell (PSCell) addition and change-related configuration, and particularly, to a method of processing conditional PSCell addition and change-related configuration during a mobile operation of the UE.

### [Background Art]

5-th generation (5G) mobile communication technologies define broad frequency bands such that high transmission rates and new services are possible, and may be implemented not only in "Sub 6 GHz" bands, such as 3.5 gigahertz (GHz), but also in "Above 6 GHz" bands referred to as mmWave including 28 GHz and 39 GHz. In addition, it has been considered to implement 6-th generation (6G) mobile communication technologies referred to as Beyond 5G systems in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting various numerologies (e.g., operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods, such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies, such as vehicle-to-everything (V2X) for aiding driving determination by autonomous vehicles based on information on locations and states of vehicles transmitted by the vehicles and for enhancing user convenience, new radio unlicensed (NR-U) aimed at system operations conforming to various regulation-related requirements in unlicensed bands, NR user equipment (UE) power saving, non-terrestrial network (NTN) that is UE-satellite direct communication for providing coverage in an area in which communication with terrestrial networks is unavailable, and positioning.

In addition, there has been ongoing standardization in air interface architecture/protocol regarding technologies, such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service field regarding a 5G baseline architecture (e.g., service based architecture or service based interface) for combining Network Functions Virtualization (NFV) and Software-Defined Networking (SDN) technologies, and Mobile Edge Computing (MEC) for receiving services based on user equipment (UE) locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting augmented reality (AR), virtual reality (VR), mixed reality (MR), and the like, 5G performance improvement and complexity reduction by utilizing artificial intelligence (AI) and machine learning (ML), AI service support, metaverse service support, and drone communication.

Also, such development of 5G mobile communication systems will serve as a basis for developing not only new waveforms for providing coverage in terahertz bands of 6G mobile communication technologies, multi-antenna transmission technologies, such as full dimensional MIMO (FD-MIMO), array antennas, and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

As described above and with the development of mobile communication systems, various services may be provided and accordingly, there is a need for a method for effectively providing these services.

### [Disclosure of Invention]

### [Technical Problem]

The disclosure proposes a method and device for controlling configuration of subsequent conditional primary secondary cell group (SCG) cell (PSCell) change and addition (SCPAC) to address the above-described issues.

More particularly, a user equipment (UE) may receive SCPAC configuration information from a network. When handover (e.g., PCell change) occurs while the UE received SCPAC configuration, the existing SCPAC configuration information received by the UE may no longer be valid. The disclosure proposes a method of deleting (or removing) no longer valid SCPAC configuration.

Another objective of the disclosure is to propose a method of deleting (or removing) SCPAC configuration in a recovery operation using secondary cell group (SCG) change or conditional handover (CHO).

Also, a signal procedure may be required depending on which entity on a network performs the corresponding release operation. If the release operation is not guaranteed, the UE may perform an unnecessary measurement and condition decision operation through invalid SCPAC configuration. Another objective of the disclosure is to propose a method for addressing an issue of moving to an invalid target cell and applying configuration in the cell.

Technical subjects to be achieved by embodiments of the disclosure are not limited to the above-described technical subjects and still other technical subjects not mentioned may be clearly understood by one of ordinary skill in the art to which the disclosure pertains from the following description.

### [Solution to Problem]

The present invention for addressing the above-described problems relates to a method performed by a user equipment (UE) in a wireless communication system, and the method performed by the UE in the wireless communication system includes receiving, from a base station associated with a source cell, first conditional reconfiguration information including subsequent conditional primary secondary cell group (SCG) cell (PSCell) addition or change (SCPAC) configuration information; in case that the UE receives a message for a cell change including second conditional reconfiguration information associated with a release of the SCPAC configuration information, deleting the stored SCPAC configuration information based on the second conditional reconfiguration information associated with the release of the SCPAC configuration information; and performing the cell change to a target cell based on the message for the cell change.

According to another embodiment of the disclosure, a method performed by a base station associated with a source cell in a wireless communication system includes transmitting, to a user equipment (UE), first conditional reconfiguration information including subsequent conditional primary secondary cell group (SCG) cell (PSCell) addition or change (SCPAC) configuration information; determining whether to perform a cell change; and in case that the cell change is determined, transmitting, to the UE, a message for the cell change including second conditional reconfiguration information associated with a release of the SCPAC configuration information.

According to another embodiment of the disclosure, a user equipment (UE) in a wireless communication system includes a transceiver configured to transmit and receive signals; and a controller, wherein the controller is configured to receive, from a base station associated with a source cell, first conditional reconfiguration information including subsequent conditional primary secondary cell group (SCG) cell (PSCell) addition or change (SCPAC) configuration information, in case that the UE receives a message for cell change including second conditional reconfiguration information associated with a release of the SCPAC configuration information, delete the stored SCPAC configuration information based on the second conditional reconfiguration information associated with the release of the SCPAC configuration information, and to perform the cell change to a target cell based on the message for the cell change.

According to another embodiment of the disclosure, a base station associated with a source cell in a wireless communication system includes a transceiver configured to transmit and receive signals; and a controller, wherein the controller is configured to transmit, to a user equipment (UE), first conditional reconfiguration information including subsequent conditional primary secondary cell group (SCG) cell (PSCell) addition or change (SCPAC) configuration information, to determine whether to perform a cell change, and in case that the cell change is determined, transmit, to the UE, a message for the cell change including second conditional reconfiguration information associated with release of the SCPAC configuration information.

### [Advantageous Effects of Invention]

According to an embodiment of the disclosure, a user equipment (UE) may delete subsequent conditional primary secondary cell group (SCG) cell (PSCell) addition or change (SCPAC) n configuration. More specifically, the UE may remove SCPAC-related configuration along with a mobile operation instruction of the UE. Therefore, the UE may not perform an unnecessary SCPAC operation.

Effects that may be acquired from the disclosure are not limited to the effects mentioned in various embodiments, and still other effects not mentioned may be clearly understood by one of ordinary skill in the art to which the disclosure pertains from the following description.

### [Brief Description of Drawings]

FIG. 1 illustrates a structure of a long term evolution (LTE) system according to an embodiment of the disclosure.
FIG. 2 illustrates a wireless protocol structure in a long term evolution (LTE) system according to an embodiment of the disclosure.
FIG. 3 illustrates a structure of a next-generation mobile communication system according to an embodiment of the disclosure.
FIG. 4 illustrates a wireless protocol structure of a next-generation mobile communication system according to an embodiment of the disclosure.
FIG. 5 is a block diagram illustrating an internal structure of a user equipment (UE) according to an embodiment of the disclosure.
FIG. 6 is a block diagram illustrating a structure of a new radio (NR) base station according to an embodiment of the disclosure.
FIG. 7 illustrates a method of releasing subsequent conditional primary secondary cell group (SCG) cell (PSCell) addition and change configuration in the case of inter master node (inter-MN) handover according to an embodiment of the disclosure.
FIG. 8a illustrates a signal structure when a network delivers subsequent conditional PSCell addition and change (SCPAC) configuration to a UE according to an embodiment of the disclosure.
FIG. 8b illustrates the sequence in which a UE applies a radio resource control (RRC) reconfiguration message according to the related art.
FIG. 9 is to describe a signal structure related to subsequent conditional PSCell addition and change (SCPAC) according to an embodiment of the disclosure.
FIG. 10 is a flowchart illustrating a procedure of releasing subsequent conditional PSCell addition and change (SCPAC) configuration in the case of inter master node handover according to an embodiment of the disclosure.
FIG. 11 is a flowchart illustrating a procedure of releasing subsequent conditional PSCell addition and change (SCPAC) configuration of a PCell handover procedure of an intra master node (MN) according to an embodiment of the disclosure.
FIG. 12 is a flowchart illustrating a procedure of releasing subsequent conditional PSCell addition and change (SCPAC) configuration in secondary cell group (SCG) release according to an embodiment of the disclosure.
FIG. 13 is a flowchart illustrating a procedure of releasing subsequent conditional PSCell addition and change (SCPAC) configuration in a conditional handover (CHO) recovery procedure according to an embodiment of the disclosure.

### [Mode for the Invention]

Hereinafter, the operating principle of the present invention is described in detail with reference to the accompanying drawings. When it is determined that a detailed description of related known functions or configurations may unnecessarily obscure the gist of the present invention in describing the present invention in the following, the detailed description will be omitted. The terms that are described below are terms defined in consideration of the functions in the present invention, and may be different depending on users, intentions of operators, or customs. Therefore, the definitions of the terms should be made based on the contents throughout the specification.

Terms used herein to identify access nodes, terms indicating network entities, terms indicating messages, terms indicating interfaces between network entities, and terms indicating various identification information are examples for convenience of explanation. Therefore, the present invention is not limited to the terms described below and other terms indicating objects having the equivalent technical meaning may be used.

In the following, a base station is an entity that allocates resources to a terminal, and may be at least one of a gNode B, an eNode B, a Node B, a BS, a wireless access unit, a BS controller, and a node on a network. A terminal may include a user equipment (UE), a mobile station (MS), a cellular phone, a smartphone, a computer, or a multimedia system capable of performing communication functions. In the disclosure, a downlink (DL) refers to a radio transmission link through which a base station transmits a signal to a terminal, and an uplink refers to a radio transmission link through which a terminal transmits a signal to a base station. Also, although the following description may be directed to a long term evolution (LTE) or LTE-A system by way of example, embodiments of the disclosure may also be applied to other communication systems having similar technical backgrounds or channel types to the embodiments of the disclosure. Examples of other communication systems may include 5G mobile communication technology (5G, new radio (NR)) developed beyond LTE-A, and in the following description, "5G" may be a concept that covers exiting LTE, LTE-A, and other similar services. In addition, based on judgement by those skilled in the art, the disclosure may be applied to other communication systems through some modifications without significantly departing from the scope of the disclosure. Here, it will be understood that each block of flowchart illustrations and combinations of blocks in the flowchart illustrations may be implemented by computer program instructions.

These computer program instructions may be provided to a processor of a general-purpose computer, a special purpose computer, or other programmable data processing equipment, such that the instructions, executed via the processor of the computer or other programmable data processing equipment, generate a method for implementing the functions specified in the flowchart block(s). These computer program instructions may also be stored in a computer-usable or computer-readable memory that may direct a computer or other programmable data processing equipment to function in a particular manner, such that the instructions stored in the computer usable or computer-readable memory produce an article of manufacture including instruction methods that implement the function specified in the flowchart block(s). The computer program instructions may also be loaded onto a computer or other programmable data processing equipment to cause a series of operational steps to be performed on the computer or other programmable equipment to produce a computer implemented process such that the instructions executed on the computer or other programmable equipment provide steps for implementing the functions specified in the flowchart block(s).

Also, each block may represent a module, a segment, or a portion of code, which includes one or more executable instructions for implementing the specified logical function(s). It should also be noted that in some alternative implementations, the functions noted in the blocks may occur out of order. For example, two blocks shown in succession may in fact be executed simultaneously or the blocks may sometimes be executed in the reverse order, depending on the functionality involved. Here, the term "unit" used in the embodiments refers to a software component or a hardware component, such as a field programmable gate array (FPGA) or an application specific integrated circuit (ASIC), which performs a predetermined function. However, the term "unit" does not always have a meaning limited to software or hardware. "Unit" may be configured either to be stored in an addressable storage medium or to execute one or more processors. Therefore, "unit" includes, for example, components such as software components, object-oriented software components, class components, and task components, processes, functions, properties, procedures, sub-routines, segments of a program code, drivers, firmware, micro-codes, circuits, data, database, data structures, tables, arrays, and parameters. The components and functions provided by "units" may be combined into a smaller number of components and "units," or further divided into additional components and "units." In addition, the components and "units" may be implemented to reproduce one or more CPUs within a device or a security multimedia card. Also, in the embodiments, "unit" may include one or more processors.

Hereinafter, for convenience of explanation, the present invention uses terms and names defined in 5GS and NR standard that are defined by the 3rd Generation Partnership Project (3GPP) organization among currently existing communication standards. However, the present invention is not limited to the terms and the names, and may be equally applied to wireless communication systems that conform to other standards. For example, the present invention may be applied to 3GPP 5GS/NR (5G mobile communication standard).

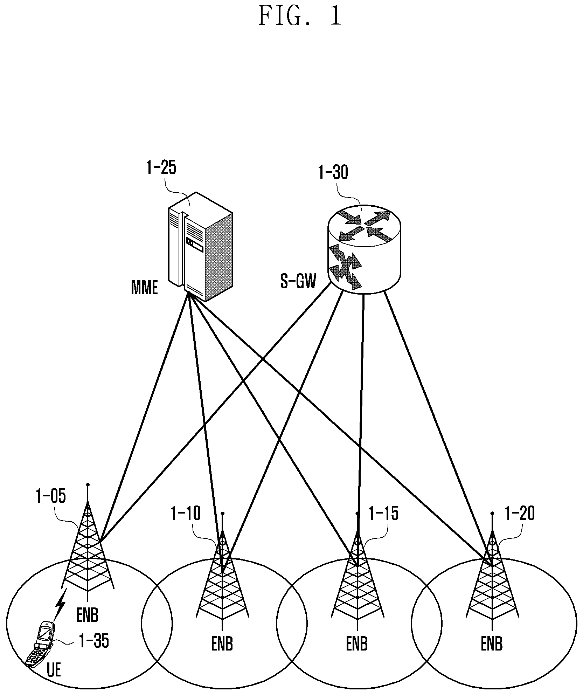

FIG. 1 illustrates a structure of a long term evolution (LTE) system according to an embodiment of the disclosure.

With reference to FIG. 1, a wireless access network of the LTE system includes next-generation based stations (evolved node B, hereinafter, ENB, node B, or base station) 1-05, 1-10, 1-15, and 1-20, a mobility management entity (MME) 1-25, and a serving-gateway (S-GW) 1-30. A user equipment (hereinafter, UE or terminal) 1-35 connects to an external network through the ENBs 1-05 to 1-20 and the S-GW 1-30.

In FIG. 1, each of the ENBs 1-05 to 1-20 may correspond to an existing node B of universal mobile communications system (UMTS). The ENB is may be connected to the UE 1-35 through a wireless channel, and may perform a more complex role than the existing node B. In the LTE system, all user traffic including real-time services, such as voice over Internet protocol (VoIP) via Internet protocol, may be serviced through a shared channel. Therefore, there is a need for a device that collects status information, such as buffer status, available transmission power status, and channel status of UEs, and performs scheduling, which may be handled by the ENBs 1-05 to 1-20. One ENB typically may control multiple cells. For example, to achieve a transmission rate of 100 Mbps, the LTE system may use, for example, an orthogonal frequency division multiplexing (OFDM) scheme as radio access technology in the bandwidth of 20 MHz. Also, the LTE system may apply an adaptative modulation & coding (AMC) scheme that determines a modulation scheme and a channel coding rate according to the channel status of the UE.

The S-GW 1-30 refers to a device that provides a data bearer, and may generate or remove the data bearer under control of the MME 1-25. The MME refers to a device that is responsible for various control functions as well as a mobility management function for the UE, and may be connected to multiple base stations.

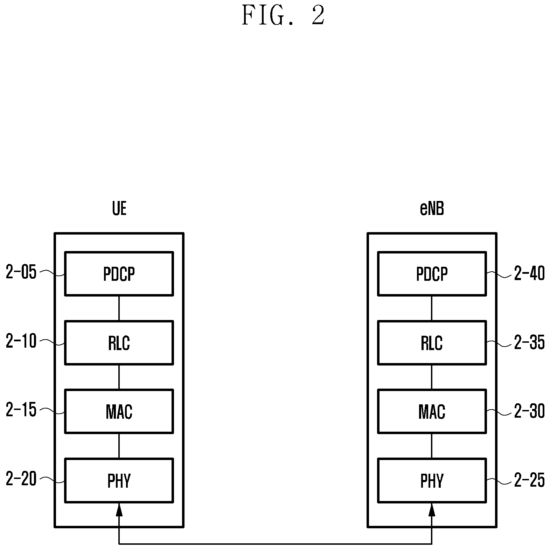

FIG. 2 illustrates a wireless protocol structure in a long term evolution (LTE) system according to an embodiment of the disclosure.

With reference to FIG. 2, the wireless protocol of the LTE system includes packet data convergence protocols (PDCPs) 2-05 and 2-40, radio link controls (RLCs) 2-10 and 2-35, and medium access controls (MACs) 2-15 and 2-30 in a UE and an ENB, respectively.

The packet data convergence protocol (PDCP) 2-05, 2-40 may be responsible for operation, such as IP header compression/decompression. Main functions of the PDCP may be summarized as follows.
- A header compression and decompression function (ROHC only)
- A user data transmission function (transfer of user data)
- A sequential delivery function (in-sequence delivery of upper layer PDUs at PDCP re-establishment procedure for RLC AM)
- A reordering function (for split bearers in DC (only support for RLC AM): PDCP PDU routing for transmission and PDCP PDU reordering for reception)
- A duplicate detection function (duplicate detection of lower layer SDUs at PDCP re-establishment procedure for RLC AM)
- A retransmission function (retransmission of PDCP SDUs at handover and, for split bearers in DC, of PDCP PDUs at PDCP data-recovery procedure, for RLC AM)
- A ciphering and deciphering function
- A timer-based SDU discard function (Timer-based SDU discard in uplink.)

The radio link control (RLC) 2-10, 2-35 may reconstruct a PDCP packet data unit (PDU) to an appropriate size, and may perform an automatic repeat request (ARQ) operation. Main functions of the RLC may be summarized as follows.
- A data transmission function (transfer of upper layer PDUs)
- An ARQ function (error correction through ARQ (only for AM data transfer))
- A concatenation, segmentation, and reassembly function (concatenation, segmentation and reassembly of RLC SDUs (only for UM and AM data transfer))
- A re-segmentation function (re-segmentation of RLC data PDUs (only for AM data transfer))
- A reordering function (reordering of RLC data PDUs (only for UM and AM data transfer))
- A duplicate detection function (duplicate detection (only for UM and AM data transfer))
- An error detection function (protocol error detection (only for AM data transfer))
- An RLC SDU discard function (RLC SDU discard (only for UM and AM data transfer))
- An RLC re-establishment function (RLC re-establishment)

The media access control (MAC) 2-15, 2-30 may be connected to a plurality of RLC layer devices configured in a single UE, and may perform an operation of multiplexing RLC PDUs to a MAC PDU and demultiplexing the RLC PDUs from the MAC PDU. Main functions of the MAC may be summarized as follows.
- A mapping function (mapping between logical channels and transport channels)
- A multiplexing and demultiplexing function (multiplexing/demultiplexing of MAC SDUs belonging to one or different logical channels into/from transport blocks (TB) delivered to/from the physical layer on transport channels)
- A scheduling information reporting function
- A HARQ function (error correction through HARQ)
- A priority handling function between logical channels (priority handling between logical channels of one UE)
- A priority handling function between UEs (priority handling between UEs by means of dynamic scheduling)
- A multimedia broadcast and multicast service (MBMS) service identification function
- A transport format selection function
- A padding function

A physical layer (PHY) 2-20, 2-25 may perform the operation of channel-coding and modulating higher layer data, converting the same to an OFDM symbol, and transmitting the OFDM symbol through a wireless channel, or demodulating and channel-decoding the OFDM symbol received through the wireless channel and transmitting the demodulated and channel-coded OFDM symbol to the higher layer.

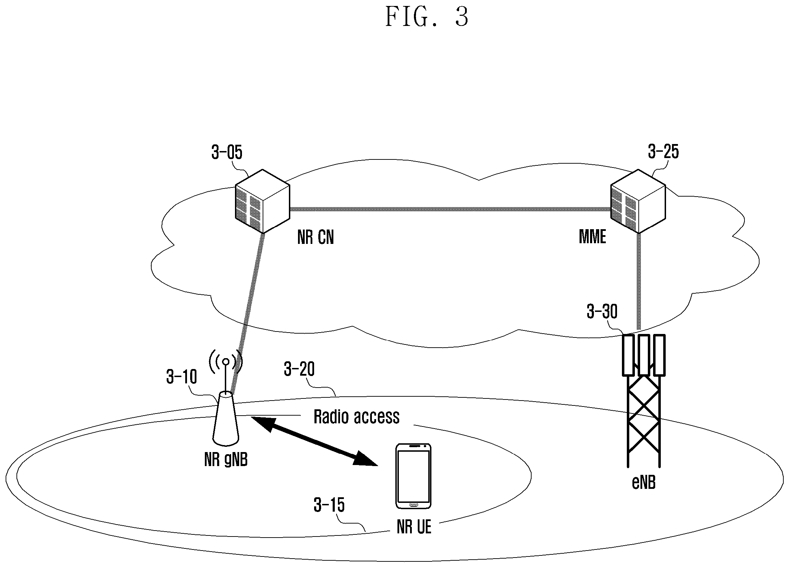

FIG. 3 illustrates a structure of a next-generation mobile communication system according to an embodiment of the disclosure.

With reference to FIG. 3, a wireless access network of the next-generation mobile communication system (hereinafter, new radio (NR) or 5G) may include a next-generation base station (new radio node B, hereinafter, NR gNB or NR BS) 3-10 and a next generation core network (NG CN) 3-05. A UE (new radio user equipment (NR UE) or terminal) 3-15 may connect to an external next through the NR gNB 3-10 and the NR CN 3-05.

In FIG. 3, the NR gNB 3-10 may correspond to an existing evolved node B (eNB) of the LTE system. The NR gNB may be connected to the NR UE 3-15 through a wireless channel, and may provide superior services compared to the existing node B.

In the next-generation mobile communication system, all user traffic may be serviced through a shared channel. Therefore, there is a need for a device that collects status information, such as buffers status, available transmission power status, and channel status of UEs. The scheduling may be handled by the NR NB 3-10. One NR gNB may typically control multiple cells.

In the next-generation mobile communication system, the bandwidth of the general maximum bandwidth or more may be applied to achieve ultra-high-speed data transmission compared to the existing LTE. Also, beamforming technology may be additionally incorporated by employing orthogonal frequency division multiplexing (OFDM) as radio access technology.

Also, an adaptative modulation & coding (AMC) scheme that determines a modulation scheme and a channel coding rate according to the channel status of the UE may be applied.

The radio core network (NR CN) 3-05 may perform functions, such as mobility support, bearer configuration, and quality of service (QoS) configuration. The NR CN refers to a device that is responsible for various control functions as well as a mobility management function for the UE, and may be connected to multiple base stations. Also, the next-generation mobile communication system may also interwork with the LTE system, and the NR CN may be connected to a mobility management entity (MME) 3-25 through a network interface. The MME may be connected to the existing LTE base station, an eNB 3-30.

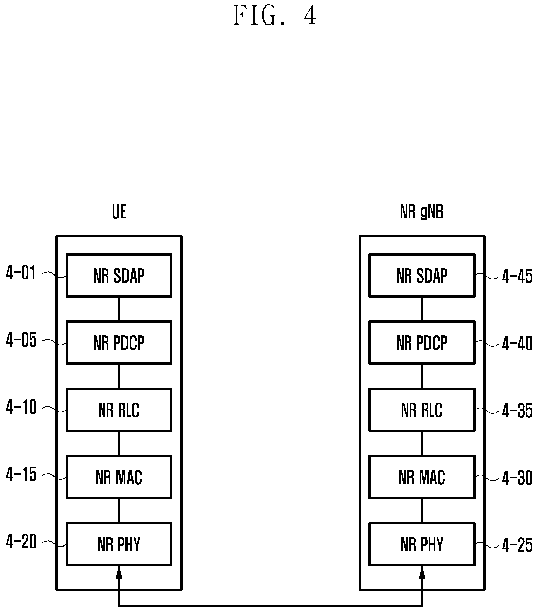

FIG. 4 illustrates a wireless protocol structure of a next-generation mobile communication system according to an embodiment of the disclosure.

With reference to FIG. 4, a wireless protocol of the next-generation mobile communication system may include NR service data adaptation protocols (SDAPs) 4-01 and 4-45, NR packet data convergence protocols (PDCPs) 4-05 and 4-40, NR radio link controls (RLCs) 4-10 and 4-35, and NR medium access controls (MACs) 4-15 and 4-30 in the UE and the NR base station, respectively.

Main functions of the NR service data adaptation protocol (SDAP) 4-01, 4-45 may include some of the following functions.

A user data delivery function (transfer of user plane data)

A function of mapping a QoS flow and a data bearer for uplink and downlink (mapping between a QoS flow and a DRB for both DL and UL)

A function of marking a QoS flow ID for uplink and downlink (marking QoS flow ID in both DL and UL packets)

A function of mapping a reflective QoS flow to a data bearer for uplink SDAP PDUs (reflective QoS flow to DRB mapping for the UL SDAP PDUs).

For the SDAP layer device, the UE may receive a configuration as to whether to use a header of the SDAP layer device or a function of the SDAP layer device for each PDCP layer device, each bearer, or each logical channel through a radio resource control (RRC) message. When the SDAP header is configured, a 1-bit indicator of non-access stratum (NAS) reflective QoS and a 1 bit-indicator of AS reflective QoS of the SDAP header may instruct the UE to update or reconfigure mapping information on mapping of QoS flow and a data bearer in uplink and downlink. The SDAP header may include QoS flow ID information indicating QoS. The QoS information may be used as data processing priority or scheduling information to support a seamless service.

Main functions of the NR packet data convergence protocol (PDCP) 4-05, 4-40 may include some of the following functions.
- A header compression and decompression function (ROHC only)
- A user data transmission function (transfer of user data)
- A sequential delivery function (in-sequence delivery of higher layer PDUs)
- A non-sequential delivery function (out-of-sequence delivery of higher layer PDUs)
- A reordering function (PDCP PDU reordering for reception)
- A duplicate detection function (duplicate detection of lower layer SDUs)
- A retransmission function (retransmission of PDCP SDUs)
- A ciphering and deciphering function (ciphering and deciphering)
- A timer-based SDU discard function (timer-based SDU discard in uplink.)

In the above-described description, the reordering function of the NR PDCP layer device may represent a function of sequentially reordering PDCP PDUs received from a lower layer on the basis of a PDCP sequence number (SN). The reordering function of the NR PDCP device may include a function of sequentially transferring the reordered data to a higher layer. Alternatively, the reordering function of the NR PDCP layer device may include a function of directly transmitting data regardless of the sequence, a function of recording PDCP PDUs lost due to the reordering, a function of reporting the status of the lost PDCP PDUs to a transmitting side, and a function of making a request for retransmitting the lost PDCP PDUs.

Main functions of the NR radio link control (RLC) 4-10, 4-35 may include some of the following functions.
- A data transmission function (transfer of higher layer PDUs)
- A sequential delivery function (in-sequence delivery of upper-layer PDUs)
- A non-sequential delivery function (out-of-sequence delivery of upper-layer PDUs)
- An ARQ function (error correction through ARQ)
- A concatenation, segmentation, and reassembly function (concatenation, segmentation and reassembly of RLC SDUs)
- A re-segmentation function (re-segmentation of RLC data PDUs)
- A reordering function (reordering of RLC data PDUs)
- A duplicate detection function (duplicate detection)
- An error detection function (protocol error detection)
- An RLC SDU discard function
- An RLC reestablishment function

In the above-described description, the sequential delivery function (in-sequence delivery) of the NR RLC device may represent a function of sequentially transmitting RLC SDUs received from the lower layer to the higher layer. When one original RLC SDU is divided into a plurality of RLC SDUs and then received, the sequential delivery function (in-sequence delivery) of the NR RLC device may include a function of reassembling and transmitting the RLC SDUs.

The sequential delivery function (in-sequence delivery) of the NR RLC device may include a function of reordering the received RLC PDUs on the basis of an RLC SN or a PDCP SN, a function of recording RLC PDUs lost due to the reordering, a function of reporting the status of the lost RLC PDUs to a transmitting side, and a function of making a request for retransmitting the lost RLC PDUs.

The sequential delivery function (in-sequence delivery) of the NR RLC device may include a function of sequentially transmitting only RLC SDUs up to a lost RLC SDU to a higher layer when there is the lost RLC SDU.

The sequential delivery function (in-sequence delivery) of the NR RLC device may include a function of sequentially transmitting, to the higher layer, all the RLC SDUs received before a timer starts if a predetermined timer has expired, although there is a lost RLC SDU.

The sequential delivery function (in-sequence delivery) of the NR RLC device may include a function of sequentially transmitting all the RLC SDUs received so far to the higher layer if a predetermined timer has expired, although there is a lost RLC SDU.

The NR RLC device may process RLC PDUs received in order in which they are received regardless of the order of sequence number, and may transmit the same to an NR PDCP device (out-of-sequence delivery).

When the NR RLC device receives a segment, the NR RLC device may receive segments stored in a buffer or to be received later, may reconstruct them into a complete single RLC PDU, and then may transmit this to the NR PDCP device.

The NR RLC layer may not include a concatenation function, and may perform the function in the NR MAC layer, or may replace the function with a multiplexing function of the NR MAC layer.

In the above-described description, the non-sequential delivery function (out-of-sequence delivery) of the NR RLC device may represent a function of delivering RLC SDUs received from the lower layer directly to the higher layer regardless of the sequence of the RLC SDUs. The non-sequential delivery function (out-of-sequence delivery) of the NR RLC device may include, when one original RLC SDU is divided into a plurality of RLC SDUs and then received, a function of reassembling and transmitting the RLC PDUs. The non-sequential delivery function (out-of-sequence delivery) of the NR RLC device may include a function of storing RLC SNs or PDCP SNs of the received RLC PDUs, reordering the RLC PDUs, and recording lost RLC PDUs.

The NR medium access controls (MACs) 4-15, 4-30 may be connected to a plurality of NR RLC layer devices configured in one UE, and main functions of the NR MAC may include some of the following functions.
- A mapping function (mapping between logical channels and transport channels)
- A multiplexing and demultiplexing function (multiplexing/demultiplexing of MAC SDUs)
- A scheduling information reporting function
- A HARQ function (error correction through HARQ)
- A logical channel priority handling function (priority handling between logical channels of one UE)
- A UE priority handling function (priority handling between UEs by means of dynamic scheduling)
- An MBMS service identification function (MBMS service identification)
- A transport format selection function
- A padding function

The NR physical layer (NR PHY layer) 4-20, 4-25 may perform an operation for channel-coding and modulating higher layer data to generate an OFDM symbol and transmitting the OFDM symbol through a wireless channel, or demodulating and channel-decoding the OFDM symbol received through the wireless channel and transmitting the demodulated and channel-decoded OFDM symbol to the higher layer.

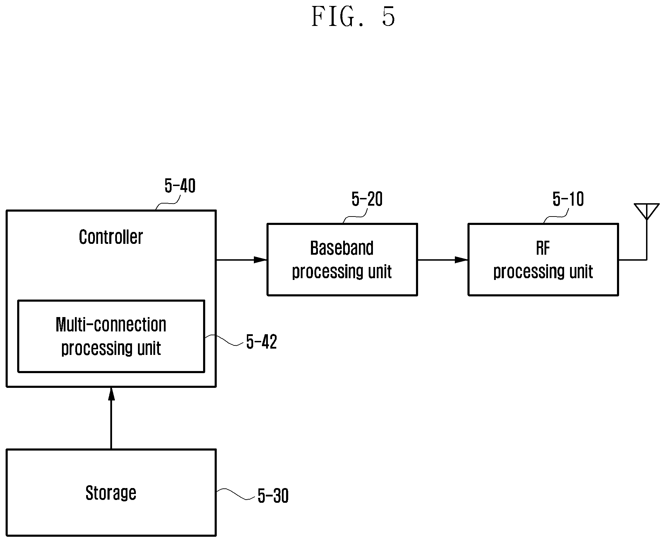

FIG. 5 is a block diagram illustrating an internal structure of a UE according to an embodiment of the disclosure.

With reference to the drawing, the UE may include a radio frequency (RF) processing unit 5-10, a baseband processing unit 5-20, a storage 5-30, and a controller 5-40.

The RF processing unit 5-10 may perform a function for transmitting and receiving signals through a wireless channel, such as band conversion and amplification of a signal. The RF processing unit 5-10 may up-convert a baseband signal provided from the baseband processing unit 5-20 to an RF band signal and then transmit the same through an antenna, and may down-convert an RF band signal received through the antenna to a baseband signal. For example, the RF processing unit 5-10 may include a Tx filter, an Rx filter, an amplifier, a mixer, an oscillator, a digital-to-analog convertor (DAC), and an analog-to-digital convertor (ADC). Although only a single antenna is illustrated in the drawing, the UE may include a plurality of antennas. Also, the RF processing unit 5-10 may include multiple RF chains. Further, the RF processing unit 5-10 may perform beamforming. For the beamforming, the RF processing unit 5-10 may adjust the phase and magnitude of each of signals transmitted and received through multiple antennas or antenna elements. Also, the RF processing unit may perform multiple input multiple output (MIMO), and may receive a plurality of layers when performing a MIMO operation.

The baseband processing unit 5-20 may perform a conversion function between a baseband signal and a bitstream according to a physical layer standard of the system. For example, when transmitting data, the baseband processing unit 5-20 may generate complex symbols by encoding and modulating a transmission bitstream. Also, when receiving data, the baseband processing unit 5-20 may restore a received bitstream by demodulating and encoding the baseband signal provided from the RF processing unit 5-10. For example, in the case of following an orthogonal frequency division multiplexing (OFDM) method, when transmitting data, the baseband processing unit 5-20 generates complex symbols by encoding and modulating the transmission bitstream, maps the complex symbols to subcarriers, and then constructs OFDM symbols through inverse fast Fourier transform (IFFT) operation and cyclic prefix (CP) insertion. Also, when receiving data, the baseband processing unit 5-20 divides the baseband signal provided from the RF processing unit 5-10 into OFDM symbol units, restores signals mapped to subcarriers through fast Fourier transform (FFT) operation, and then restores the received bitstream through demodulation and decoding.

The baseband processing unit 5-20 and the RF processing unit 5-10 may transmit and receive signals as described above. Accordingly, the baseband processing unit 5-20 and the RF processing unit 5-10 may be referred to as a transmitter, a receiver, a transceiver, or a communication unit. Further, at least one of the baseband processing unit 5-20 and the RF processing unit 5-10 may include multiple communication modules to support different multiple radio access technologies. Also, at least one of the baseband processing unit 5-20 and the RF processing unit 5-10 may include different communication modules to process signals of different frequency bands. For example, the different radio access technologies may include a wireless local area network (LAN) (e.g., IEEE 802.11) and a cellular network (e.g., LTE). Also, the different frequency bands may include a super high frequency (SHF) (e.g., 2.NRHz, NRhz) band and a millimeter wave (mm) (e.g., 60GHz) band.

The storage 5-30 stores data, such as a basic program, an application program, and configuration information, for the operation of the UE. In particular, the storage 5-30 may store information related to a second access node that performs wireless communication using second radio access technology. And, the storage 5-30 provides stored data upon request from the controller 5-40.

The controller 5-40 controls the overall operation of the UE. For example, the controller 5-40 transmits and receives signals through the baseband processing unit 5-20 and the RF processing unit 5-10. Also, the controller 5-40 writes and reads data to and from the storage 5-40. To this end, the controller 5-40 may include at least one processor. For example, the controller 5-40 may include a communication processor (CP) for performing control for communication and an application processor (AP) for controlling a higher layer, such as an application program.

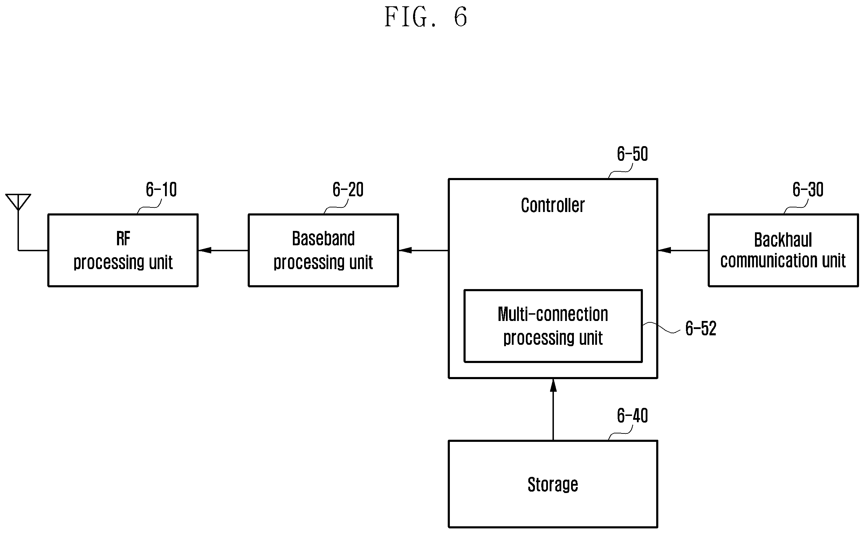

FIG. 6 is a block diagram illustrating a structure of a new radio (NR) base station according to an embodiment of the disclosure.

As illustrated in the drawing, the base station includes a radio frequency (RF) processing unit 6-10, a baseband processing unit 6-20, a backhaul communication unit 6-30, a storage 6-40, and a controller 6-50.

The RF processing unit 6-10 may perform a function for transmitting and receiving signals through a wireless channel, such as band conversion and amplification of a signal. That is, the RF processing unit 6-10 up-converts a baseband signal provided from the baseband processing unit 6-20 to an RF band signal and then transmits the same through an antenna, and down-converts an RF band signal received through the antenna to a baseband signal. For example, the RF processing unit 6-10 may include a Tx filter, an Rx filter, an amplifier, a mixer, an oscillator, a DAC, and an ADC. Although only a single antenna is illustrated in the drawing, the first access node may include multiple antennas. Also, the RF processing unit 6-10 may include multiple RF chains. Further, the RF processing unit 6-10 may perform beamforming. For the beamforming, the RF processing unit 6-10 may adjust the phase and magnitude of each of signals transmitted and received through multiple antennas or antenna elements. The RF processing unit may perform a downlink MIMO operation by transmitting one or more layers.

The baseband processing unit 6-20 may perform a conversion function between a baseband signal and a bitstream according to a physical layer standard of first radio access technology. For example, when transmitting data, the baseband processing unit 6-20 may generate complex symbols by encoding and modulating a transmission bitstream. Also, when receiving data, the baseband processing unit 6-20 restores a received bitstream by demodulating and encoding the baseband signal provided from the RF processing unit 6-10. For example, in the case of following an OFDM method, when transmitting data, the baseband processing unit 6-20 may generate complex symbols by encoding and modulating the transmission bitstream, may map the complex symbols to subcarriers, and then construct OFDM symbols through IFFT operation and CP insertion. Also, when receiving data, the baseband processing unit 6-20 divides the baseband signal provided from the RF processing unit 6-10 into OFDM symbol units, restores signals mapped to subcarriers through FFT operation, and then restores the received bitstream through demodulation and decoding. The baseband processing unit 6-20 and the RF processing unit 6-10 transmit and receive signals as described above. Accordingly, the baseband processing unit 6-20 and the RF processing unit 6-10 may be referred to as a transmitter, a receiver, a transceiver, or a communication unit.

The backhaul communication unit 6-30 provides an interface for communicating with other nodes within a network. That is, the backhaul communication unit 6-30 may convert a bitstream transmitted from the main base station to another node, for example, an auxiliary base station and a core network, to a physical signal, and converts a physical signal received from the other node to a bitstream.

The storage 6-40 may store data, such as a basic program, an application program, and configuration information, for the operation of the main base station. In particular, the storage 6-40 may store information on a bearer assigned to the connected UE and the measurement results reported from the connected UE. Also, the storage 6-40 may store information that serves as a basis for determining whether to provide multiconnection to the UE or whether to suspend the same. And, the storage 6-40 provides stored data upon request from the controller 6-50.

The controller 6-50 controls the overall operation of the base station. For example, the controller 6-50 transmits and receives signals through the baseband processing unit 6-20 and the RF processing unit 6-10 or through the backhaul communication unit 6-30. Also, the controller 6-50 writes and reads data to and from the storage 6-40. To this end, the controller 6-50 may include at least one processor.

Hereinafter, the following terms and abbreviations may be used throughout the specification.
- Conditional PSCell addition (CPA)/ conditional PSCell change (CPC)
- Subsequent conditional PSCell addition and change (SCPAC)
- Master node (MN)
- Secondary node (SN)
- Master cell group (MCG)
- Secondary cell group (SCG)

The SCPAC background operation according to an embodiment of the disclosure is as follows.

In a situation in which the UE constructs dual connection through an MN and an SN of the base station, the SN may request resource allocation for performing SCPAC to another SN (hereinafter, also referred to as "candidate SN"). To this end, necessary information may be delivered to the MN. The information may convey information indicating at least one proposed candidate PSCell for each of candidate SNs, measurement result information on the corresponding PSCell, and initial condition information for moving from a current PSCell of the SN to the candidate PSCells.

The MN may receive the information from an S-SN, and may transmit the information by applying an SNAddition procedure for each candidate SN.

Each candidate SN may transmit the proposed candidate PSCell given to the corresponding candidate SN and measurement result information of the corresponding cell, and may also transmit proposed candidate PSCell information on other candidate SNs.

Each candidate SN that receives this information may determine a PSCell to which SCPAC resources are to be allocated from its proposed PSCells, and may include information of the cell in an SNADDReqACK message to transmit the same to the MN. Also, condition information to be used when moving from the determined PSCell to other candidate PSCells may also be transmitted.

The MN that receives the information may transmit the information to the UE as SCPAC configuration in linkage with target configuration for the determined PSCells and condition information required when moving from the corresponding target cell to another SCPAC candidate cell. This configuration may be transmitted using an RRCReconfiguration message.

After receiving the configuration, the UE may perform a measurement and condition evaluation operation. Then, when a specific condition is satisfied, the UE may move to the corresponding candidate PSCell. Here, the SCPAC configuration may be maintained in the UE as is, and even after PSCell movement, the UE may continuously perform the SCPAC operation using necessary condition information and target cell configuration information within the same SCPAC configuration.

In the case of following the related art, problems are as follows.

In the case of performing PCell change, SCG release, normal PSCell change, or CHO recovery operations to the UE that performs the above-described SCPAC operation, there may be cases in which SCPAC configuration needs to be deleted (removed) rather than maintained as is. In the case of performing the mobility operation, the UE needs to remove SCPAC configuration by itself or the network needs to explicitly transmit (or give) a signal (or signaling) of removing the configuration.

On a running RRC CR currently being discussed, an instruction to delete (or remove) the SCPAC configuration may be performed within condReconfigToRemoveList-r16 within a conditional reconfiguration field. By marking conditional Reconfig Id of a target PSCell indicated as an SCPAC candidate cell in the information element (IE), the corresponding target PSCell may not be configured as SCPAC any longer.

However, the condReconfigToRemoveList-r16 is present within a conditional reconfiguration field. When the RRCReconfiguration message includes reconfigurationWithSync of the MCG or reconfigurationWithSync field of the SCG, the conditional reconfiguration field may not be included. That is, the conditionalReconfiguration field may not be included in a command for PSCell change or handover (HO) of the MCG or the SCG. Therefore, to delete (or remove) the SCPAC configuration, the network needs to issue a command to delete SCPAC configuration before or after the RRCREconfiguration message indicating HO or PSCell change.

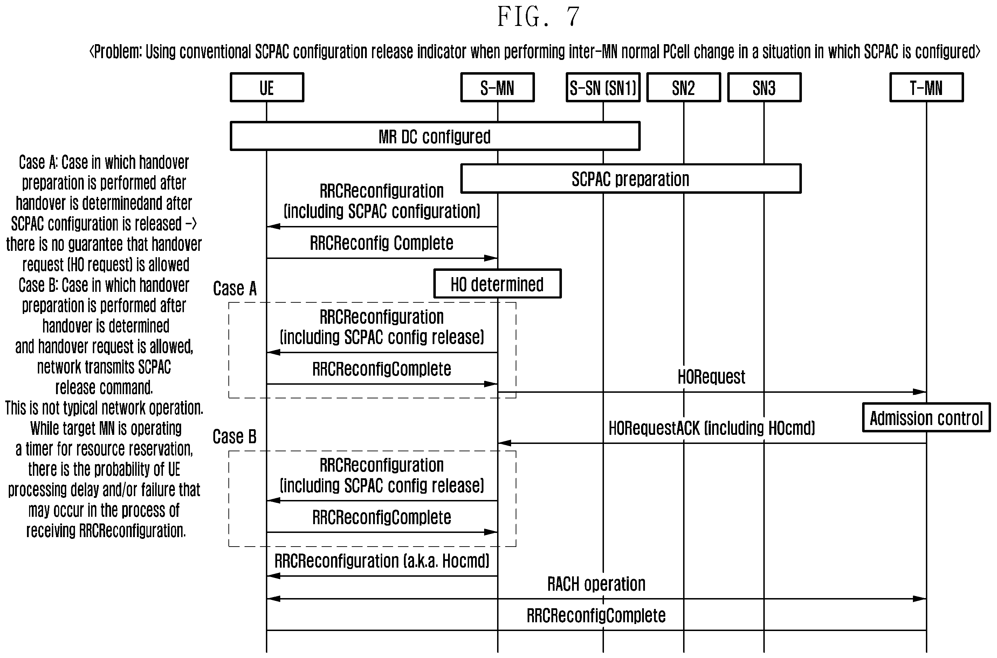

FIG. 7 illustrates a method of releasing subsequent conditional primary secondary cell group (SCG) cell (PSCell) addition and change in the case of inter master node (inter-MN) handover according to an embodiment of the disclosure.

FIG. 7 illustrates a case of releasing SCPAC before or after HO preparation in the case of inter-MN handover.

In FIG. 7, a case of inter-MN PCell change is assumed. After a source-master node (S-MN) and a source-secondary node (S-SN) configure (or construct) dual connection (or dual connectivity) and then prepare SCPAC configuration (SCPAC config), the S-MN may transmit the corresponding SCPAC configuration to a UE and then may determine handover (HO) to a specific target PCell.

More specifically, the UE may configure dual connectivity (DC) with the S-MN and the S-SN (SN1), and the S-MN may transmit, to the UE, an RRCReconfiguration message that includes SCPAC configuration information. Then, the UE may transmit an RRCReconfigcomplete message to the S-MN.

As in Case A, there may be a case in which final admission control fails in a handover preparation process after the S-MN releases SCPAC (or SCPAC configuration). In this case, there may be a problem that the UE does not perform the SCPAC operation by unnecessarily deleting (or removing) SCPAC configuration although the UE does not move to a target PCell.

More specifically, to release SCPAC (or SCPAC configuration), the S-MN may transmit an RRCReconfiguration message that includes SCPAC configuration information release to the UE. The UE may transmit an RRCReconfigcomplete message to the S-MN. Alternatively, the S-MN may prepare for handover to a T-MN, and may fail final admission control in this process.

Alternatively, as in Case B, link failure may occur when admission is made after HO preparation, in the case of performing the SCPAC release, and in the case of transmitting a message issuing a release command and receiving the corresponding complete message. This may be a problem when it is assumed that a HO preparation procedure is an immediate action up to the order in which the HO command is delivered.

In particular, in the target master-node (T-MN), a timer may operate to measure a period of time until the UE accesses the T-MN after transmitting HORequestACK. Since the corresponding timer is set to a relatively short period of time, a delay in transmission of other RRC messages before transmitting the HO command and failure according thereto may cause an unnecessary time for maintaining allocated resources in the T-MN.

More specifically, the S-MN may transmit a HO request message to the T-MN. The T-MN may perform admission control. When admission is allowed, the T-MN may transmit, to the S-MN, a HO request acknowledgement message that includes the HO command.

Then, the S-MN may transmit an RRCReconfiguration message that includes SCPAC configuration release to the UE. The UE may transmit an RRCReconfiguration complete message to the S-MN. In this process, link failure may occur.

In this case, a timer may operate in the T-MN to measure a period of time used until the UE connects to the T-MN, and the latency due to the RRCReconfiguration transmission failure may cause an unnecessary time in maintaining allocated resources in the T-MN.

In another case, after the HO command, the T-MN may issue a command to release the SCPAC configuration. Here, the UE may perform HO, may connect to a target PCell, and may continuously maintain SCPAC until the UE receive separate RRCReconfiguration that includes a release command. Therefore, there is a problem that a time interval following invalid SCPAC configuration occurs.

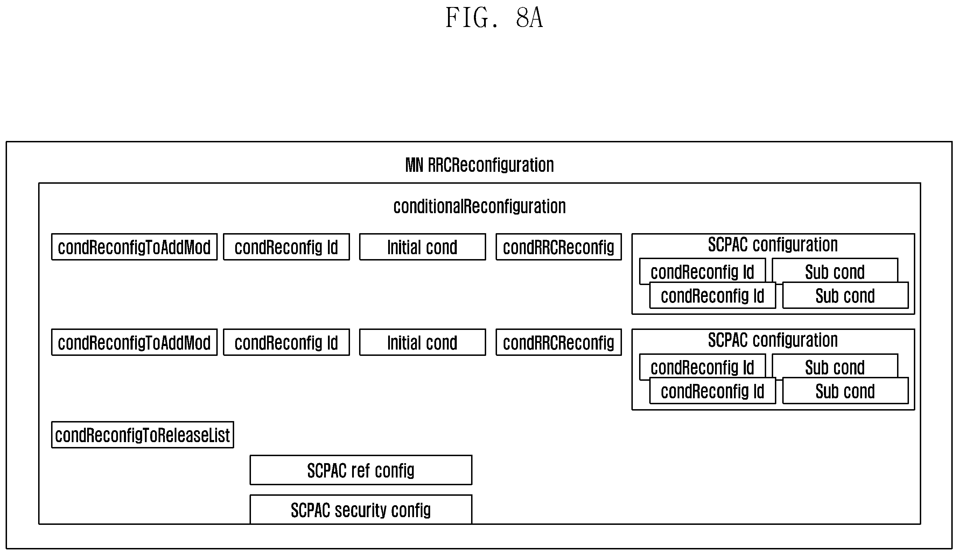

FIG. 8a illustrates a signal structure when a network delivers subsequent conditional PSCell addition and change (SCPAC) configuration to a UE according to an embodiment of the disclosure.

With reference to FIG. 8a, subsequent conditional PSCell addition and change (SCPAC) configuration (or configuration information) may be transmitted through a radio resource control (RRC) reconfiguration (e.g., RRCReconfiguration) message in an MN format. The RRC reconfiguration message may include (or have) a conditional reconfiguration field. The conditional reconfiguration field may be associated with at least one of the following information for a single target PSCell.
- ID of the configuration (condReconfig Id),
- Target PSCell configuration (condRRCReconfig),
- Condition information required to move to the corresponding target cell at the time of configuration (initial cond),
- A collection of condition information lists to perform subsequent movement from another SCPAC candidate cell to the target PSCell, that is, to perform SCPAC (SCPAC configuration)

The UE that receives the information may evaluate conditions within SCPAC configuration when performing subsequent movement between SCPAC candidate cells, and may move to a SCPAC candidate cell that satisfies conditions.

The release operation of SCPAC configuration mentioned herein may include release of all components indicated by the ID. Alternatively, the release of SCPAC configuration may indicate the release of only a subsequent movement condition list that is specified as the SCPAC configuration.

In the case of performing the SCPAC release using the method of opt 1, 2 mentioned in this specification, and in the case of releasing all the components indicated by ID, all relevant information of an SCPAC candidate cell is removed. Meanwhile, in the case of releasing only a subsequent movement condition list specified as SCPAC configuration, configuration and initial conditions of a corresponding candidate cell may remain. In this case, there is a difference in that the UE may still perform a one-time conditional PCell change (CPC) or conditional PCell addition (CPA) operation.

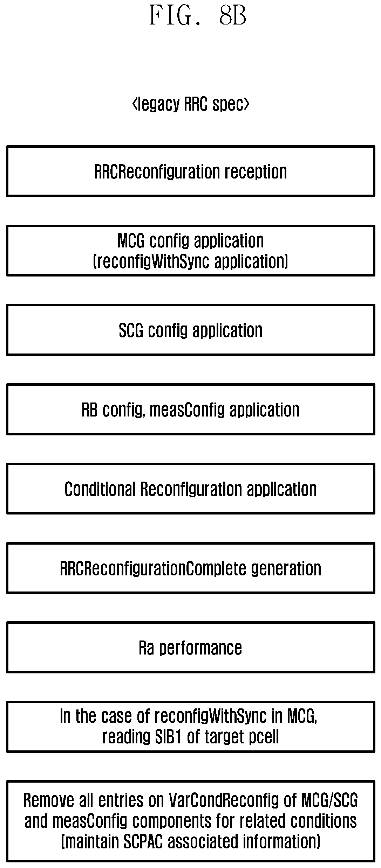

FIG. 8b illustrates the sequence in which a UE applies a radio resource control (RRC) reconfiguration message according to the related art.

With reference to, application of an RRCReconfiguration message indicating a HO command or PSCell change in the UE may be as follows.

More specifically, when the UE receives RRCReconfigurtion,
- Master cell group (MCG) configuration may be applied (or reconfigWithSync may be applied).
- Secondary cell group (SCG) configuration may be applied.
- Radio bearer (RB) configuration and measurement configuration (measConfig) may be applied.
- Configuration of a conditional reconfiguration field may be applied.
- An RRCReconfigurationComplete message may be generated and transmitted to a lower layer.
- Random access (RA) may be performed.
- If the MCG includes the reconfigurationWithSync field, necessary information may be acquired by receiving (or reading) system information block 1 (SIB1) of the target PCell.
- If the MCG includes the reconfigurationWithSync field, or if conditional PSCell addition and change (CPAC) configuration is present and the SCG includes the reconfigurationWithSync field, all entry information in VarcondReconfig of the MCG and SCG is deleted (or removed). All components of measurement configuration for condition information associated with the entry are removed.

The above-described operation is a legacy operation that does not consider SCPAC. In a final stage of SCPAC in the running CR, that is, in an operation of removing all entry information and deleting (or removing) measurement configuration of associated condition information, entry and condition information associated with SCPAC is maintained without being removed.

According to an embodiment of the disclosure, proposed is an operation in which the network additionally deletes (or removes) information of conditions associated with the remaining SCPAC config with the assumption that the optional release is already present as the operation of the UE. More specifically, the method proposed in the disclosure is as follows. When removal of SCPAC configuration is included in a message instructing to perform a mobility operation (e.g., handover command and/or PSCell change message), the UE may ideally operate. Accordingly, for mobility cases, the release of SCPAC configuration needs to be included in the RRC message that indicates the mobility operation, and a solution to resolve the current operational problem is proposed.

Here, the HO command may indicate a case in which the RRCReconfiguration message includes the reconfigurationWithSync field in master cell group configuration. The PSCell change message/command may indicate a case in which the RRCReconfiguration message includes reconfigurationWithsync in secondary cell group configuration.

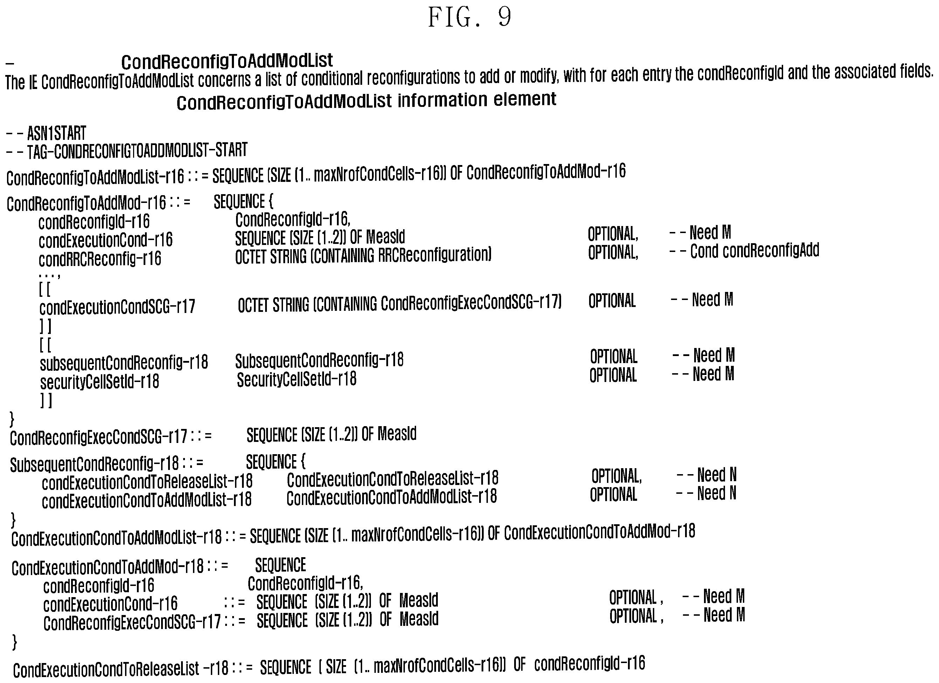

FIG. 9 illustrates a signal structure related to subsequent conditional PSCell addition and change (SCPAC) according to an embodiment of the disclosure.

The entry mentioned in the disclosure may correspond to condReconfigToAddMod of one of IEs in the drawing. Also, among these entries, a subsequentCondReconfig IE mentioned as SCPAC configuration may include only condition information used when performing SCPAC, and condReconfigToAddMod included in the subsequentCondReconfig IE is an entry that includes a candidate cell capable of performing SCPAC as a target cell.

A command IE that may add or delete (or remove) specific condition information may be included (or present) in subsequentCondReconfig. For example, the command IE that may add specific condition information may be condExecutionCondToAddModList, and the command IE that may remove specific condition information may be condExecutionCondToReleaseList.

Opt 1. The HO command and/or PSCell change command may include the conditional reconfiguration field. The conditional reconfiguration may include a release indicator of SCPAC configuration or an indicator to release all remaining conditional reconfiguration entries.

Opt 2. The HO command and/or PSCell change command may include a release indicator of SCPAC configuration or an indicator to release all remaining conditional reconfiguration entries in areas other than the conditional reconfiguration field.

In the case of Opt 1, the conditional reconfiguration field included in the HO command and/or PSCell change command may include a command to release an entry for a specific target cell previously configured to the UE, that is, an entry corresponding to a specific condReconfig Id, that is, condReconfigToremovelist. Hereinafter, Opt 1-1 and Opt 1-2 are described in detail.

Opt 1-1. In the above case, more specifically, the list (condReconfigToRemoveList) may include an entry indicated by condReconfig Id that is assigned to a target cell used as an SCPAC candidate cell among entries for each target cell of conditional reconfiguration configured to the UE. If this information is transmitted to the UE, the UE may delete (or remove) at least one of information of the entry indicated by the corresponding id (e.g., initial condition, target PSCell configuration, and condition information list to be applied when moving from this target PSCell to another SCPAC candidate PSCell), while applying the RRCReconfiguration (HO command and/or PSCell change command). In this case, the release may be performed for conditional reconfiguration ids that are currently stored in the UE's master cell group (MCG) and/or secondary cell group (SCG) variables.

Opt 1-2. In another embodiment, the condReconfigToremoveList needs to individually indicate an id of each entry, but instead of individually indicating the id of each entry, may delete (or remove) all conditional reconfiguration configuration information currently stored in the UE's MCG and/or SCG UE variables through a single indicator. That is, it is a command to remove configuration corresponding to all remaining condReconfig Ids since there is no need to indicate the ids.

In the case of Opt 1 above, it relates to deleting (or removing) configuration information on the conditional reconfiguration variable of the UE. Measurement configuration information corresponding to "condition" of condReconfig Ids to be deleted (or removed) still needs to be additionally deleted (or removed). The deleting (or removing) operation is to delete (or remove) from the measConfiguration UE variable of the MCG and/or SCG maintained by the UE. For measid associated with each condReconfig id to be released, when reportConfig that constitutes each corresponding measId is a condition type of conditional mobility, the corresponding reportConfig is deleted (or removed). Also, when measObj that constitutes the measId is used only for the conditional purpose of conditional mobility, the corresponding measObj is also deleted (or removed). Additionally, each measId may also be deleted (or removed).

To generate a UE signaling system of Opt 1 described above, a signaling system between a source-master node (S-MN) and a target-master node(T-MN) is also required.

In the case of Opt 1, the release indicator is included in the HO command, so needs to be included when a central unit (CU) of a target gNB, that is, a target PCell writes an RRCReconfiguration message (HO command). Accordingly, although the entity of writing is the T-MN, decision of this operation may be determined (or made) by the S-MN and/or may be determined (or made) by the T-MN.

Initially, the T-MN may determine SCPAC configuration release. For example, when it is determined to be unavailable depending on whether a HO request message received by the T-MN is delivered from another S-MN, and/or whether the T-MN has SCPAC configuration currently stored (held) in the UE and the context with other candidate SNs associated therewith and whether it is still available, the T-MN may be determined to perform release.

Alternatively, the S-MN may directly instruct SCPAC configuration release. The S-MN may be already aware that the HO request message transmission target is the T-MN, that is, not the S-MN itself (inter-MN). Therefore, when the S-MN transmits a HORequest message or an Xn message of the equivalent role to the T-MN by itself, the S-MN may transmit the same by including an indicator to add the SCPAC release indicator (SCPAC release indication) inside the HO command. The T-MN that receives the indicator to add the SCPAC release indicator (SCPAC release indication) may generate (or write) the HO command by including the indicator of Opt 1-1, 1-2 in the corresponding conditional reconfiguration field when writing the HO command and then may transmit the same back to the MN. Then, the HO command may be delivered to the UE, and the UE may perform the SCPAC configuration release.

In the case of SCG change, the S-SN may include an indicator to release SCPAC configuration on the SCG in the Xn message (e.g., SNAddRequest message) that requests PSCell change, if necessary, and may transmit the same to the T-SN. Then, if the T-SN receives the indicator to release the SCPAC configuration on the SCG, the T-SN may include the indicator of Opt 1-1,1-2 in the PSCell change command.

In the case of intra-MN HO and intra-SN PSCell change, no indicator is required on the Xn message.

In the case of including the indicator, a condReconfig Id value of a release target may be included for Opt 1-1. In the case of receiving the condReconfig Id value of the release target, the T-MN and/or SN may write the HO command and/or PSCell change command by including the corresponding id in the release target.

In the case of Opt 1, if conditional reconfiguration includes the release indicator of Opt 1-1, 1-2, UEs are UEs that support SCPAC, and may release only the SCPAC configuration (i.e., only SCPAC configuration-associated condReconfig Id).

In the case of Opt 1, information included in the conditional reconfiguration field may include only condReconfigTorelease.

Other information may be included. For example, at least one of the following information may be included.
- attamptCondReconfig: An indicator to select a single cell from among CHO candidate PCells to perform CHO in the case of MCG failure
- condReconfigToAddModList: CHO/CPC's target cell configuration and condition information used at that time, condReconfig Id information
   ■ Target spcell config for each id
   ■ SCPAC config: A condition list to be applied in the target cell of the id
- scpac-ReferenceConfiguration: Reference configuration that serves as basis of target cell configuration of the corresponding SCPAC
- servingSecurityCellSetId: An Id assigned to each candidate PSCell required for SCPAC operation
- sk-counterconfiguration: sk-counter values required for SCPAC operation.

When the information is included, the T-MN may perform addition, modification, and release on current conditional reconfiguration configuration stored in the UE.

The target of the addition is configuration based on a target cell (target PCell/target PSCell) of the T-MN/SN compared to configuration currently stored in the UE. That is, it may be configuration required when moving from the target cell to another PCell/PSCell.

In the case of Opt 2, the HO command and/or PSCell change command may include an SCPAC configuration release indicator or an indicator to release all remaining conditional reconfiguration entries outside the conditionalReconfiguration field. Hereinafter, it is described in detail through Opt 2-1, and Opt 2-2.

In the case of Opt 2, there is no need to depend on constraints of the conditional reconfiguration field.

Opt 2-1. A 1-bit indicator may be included in the RRCReconfiguration field regardless of MCG and/or SCG configuration. If the UE receives the indicator, the UE may perform at least one of the following operations.
- remove all the remaining entry or all the entry with the target cell configuration of SCPAC candidate cells in VarConditionalReconfig in either MCG or SCG or both MCG and SCG
- For each abovementioned entry's condition info (measId) of the MCG measConfig, and for each measId of the SCG mesaConfig,
   ■ if the associated reportConfig has a reportType set to condTriggerConfig, remove the entry with the matching reportconfig Id from the reportConfig list within the VarMeasConfig
   ■ If the associated measObjectId is only associated to a reportconfig with reporttype set to condTriggerConfig, remove the entry with the matching measObjectId from the measObjectList within the VarMeasConfig
   ■ Remove the entry with the matching measId from the measIdList within VarMeasConfig

Among the above cases, it is possible to list and indicate a specific condReconfig Id to be deleted (or removed) instead of using 1-bit indication. The UE that receives the condReconfig Id to be deleted (or removed) may delete (or remove) the entry of the indicated id.

Opt 2-2. A 1-bit indicator per each CG operation. That is, a separate indicator may be transmitted for each MCG and/or SCG. The UE that receives the indicator may separately perform an operation of deleting (or removing) all the remaining entreis or the entry having SCPAC configuration on the UE variable, deleting reportConfig from the measConfig variable, removing measObj, or removing measId, as in Opt 2-1 for the indicated CG. Therefore, a location of the indicator may be included within each MCG and/or SCG cell group configuration within RRCReconfiguration. Otherwise, classification for each CG is required.
- remove all the entry or all the entry with the target cell configuration of SCPAC candidate cells in VarConditionalReconfig in indicated CG
- For each abovementioned measId of the indicated CG's measConfig,
   ■ if the associated reportConfig has a reportType set to condTriggerConfig, remove the entry with the matching reportconfig Id from the reportConfig list within the corresponding CG's VarMeasConfig
   ■ If the associated measObjectId is only associated to a reportconfig with reporttype set to condTriggerConfig, remove the entry with the matching measObjectId from the measObjectList within the corresponding CG's VarMeasConfig
   ■ Remove the entry with the matching measId from the measIdList within corresponding CG's VarMeasConfig

Similar to Opt 1, even in the case of Opt 2 above, all the condReconfig entries may be the target to be deleted (or target to be removed). Alternatively, depending on the definition, only the condReconfiguration entry associated with the SCPAC config may be the target.

Among the above cases, it is possible to list and indicate a specific condReconfig Id to be deleted (or removed) instead of using 1-bit indication. The UE that receives the information may delete (or remove) the entry of the indicated id.

In the case of Opt 2 compared to Opt 1, conditional reconfiguration configuration including the SCPAC config may be deleted (or removed) using a single indicator. At the same time, measurement components used with the associated conditions may be deleted (or removed).

Similar to Opt 1, the S-MN or the T-MN may determine which node commands (or issues) release indication. When the S-MN makes a decision or when the T-MN makes a decision, a necessary Xn signal may be equally applied.

Also, all condReconfig may be deleted, rather than deleting (or removing) only SCPAC configuration. When id is given, condReconfig corresponding to the id may be deleted (or removed).

Alternatively, the release indicator and the id may be included in the Xn message (or given). When receiving the message, the T-MN and/or T-SN may include corresponding release information in the HO command and the PSCell change command.

In the case of intra-MN PCell HO or intra-SN PSCell change, the release indicator may be included without the Xn message.

Additionally, according to an embodiment of the disclosure, only the SCPAC condition associated to the corresponding entry may be deleted. More specifically, unlike an operation of removing the entry associated with SCPAC configuration, an operation of removing only the SCPAC condition associated with the corresponding entry may be possible. In this case, a field/IE used is not condReconfigToRemove, and removing all the corresponding SCPAC condition information by adding (or filling) Ids of conditions present in all UEs present in the field of removing the condition (e.g., condExecutionCondToReleaseList field) in the SCPAC configuration within the corresponding entry may indicate deleting (or removing) the entry having the corresponding SCPAC configuration.

This method may be an alternative to a method of using condReconfigToReleaseList of Opt 1. That is, if the HO command and/or PSCell change command are delivered to the UE by including, in conditional reconfiguration, Id of all SCPAC condition information that is set for the corresponding target PSCell in condExecutionCondToReleaseList within subsequentCondReconfig field of the entry associated with each SCPAC configuration, the UE may delete (or remove) all the conditions corresponding to the id. If there is no more condition information for the corresponding SCPAC operation, the UE may remove the entry of the corresponding SCPAC configuration.

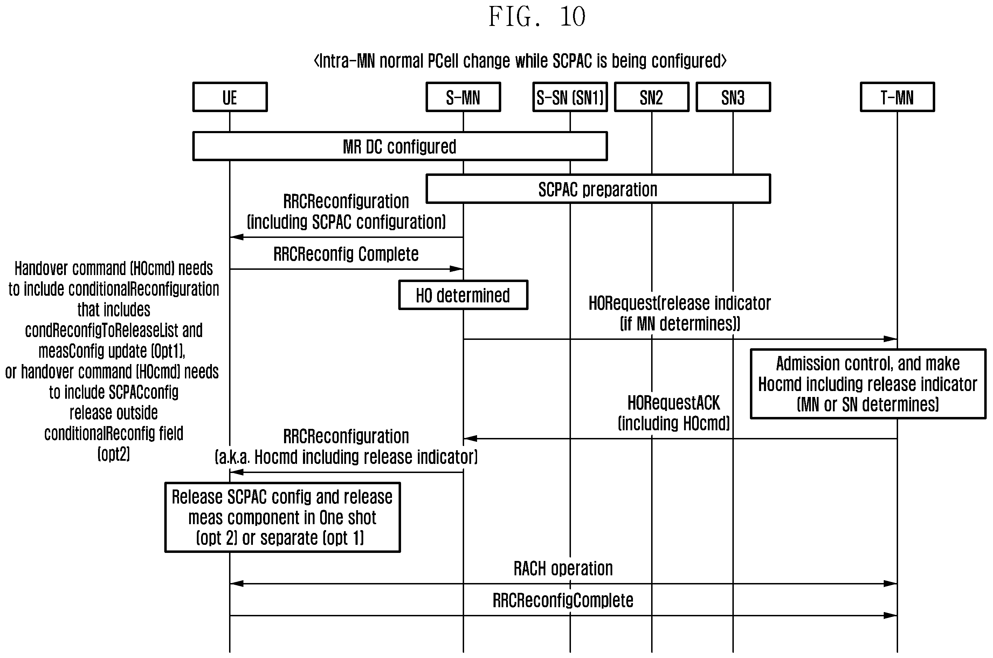

FIG. 10 is a flowchart illustrating a procedure of releasing subsequent conditional PSCell addition and change (SCPAC) configuration in the case of inter master node (MN) handover according to an embodiment of the disclosure.

With reference to FIG. 10, an embodiment in the case of inter MN normal HO (PCell change) is illustrated.

Initially, the UE may be in a dual connection (or dual connectivity (DC)) situation with a source-master node (S-MN) and a source-secondary node (S-SN) (MR DC configured). In a situation in which the UE constructs the dual connection through an MN and an SN of the base station, the UE may perform subsequent conditional PSCell addition and change (SCPAC) preparation.

The SCPAC preparation may include the following.

The SN (e.g., SN1) may request resource allocation for SCPAC from another SN (, which may be referred to as "candidate SN," e.g., SN2, SN3, ...). To this end, the S-SN may transmit necessary information to the MN. The necessary information may include information indicating proposed candidate PSCells for the respective candidate SNs, measurement result information on the corresponding PSCell, and initial condition information for moving from a current PSCell of the SN to the candidate PSCells.

The MN may receive the information from the S-SN, and may transmit the information by applying an SNAddition procedure for each candidate SN.

Each candidate SN may transmit the proposed candidate PSCell given to the candidate SN and measurement result information of the corresponding cell, and may also transmit proposed candidate PSCell information on other candidate SNs.

Each candidate SN that receives this information may determine a PSCell to which SCPAC resources are to be allocated among its proposed PSCells, and may include information of the corresponding cell in an SNADDReqACK message to transmit the same to the MN. Also, condition information to be used when moving from the determined to at least one another candidate PSCell may also be transmitted.

The MN that receives the information may link to target configuration and condition information required when moving from the corresponding target cell to another SCPAC candidate cell for the determined at least one PSCell, and may transmit the same to the UE as SCPAC configuration.

The series of procedures may be viewed as SCPAC preparation.

Then, the S-MN may transmit the SCPAC configuration to the UE through an RRCReconfiguration message. More specifically, the S-MN may transmit, to the UE, the RRCReconfiguration message that includes the SCPAC configuration, and the UE may transmit an RRCReconfigurationComplete message to the S-MN.

After receiving the SCPAC configuration, the UE may perform a measurement and condition evaluation operation. Then, when a specific condition is satisfied, the UE may perform movement to the corresponding candidate PSCell.

Here, the SCPAC configuration may be maintained in the UE as is. Even after moving to the PSCell, the UE may continuously perform the SCPAC operation using necessary condition information and target cell configuration information within the same SCPAC configuration.

Then, the S-MN may determine handover (HO) to a specific target PCell of the target-master node (T-MN) (HO determined).

The S-MN may transmit a handover (HO) request message to the T-MN. More specifically, as preparation for the handover, the S-MN may transmit the HO request message to the T-MN. The HO request message may be transmitted by including at least one of master cell group (MCG), secondary cell group (SCG) configuration (config), radio resource management (RRM) configuration, and RRC context currently configured to the UE, and various types of current configuration information.

Additionally, the S-MN may include an indicator indicating SCPAC release. This indictor may be included in the Xn field of the HandoverRequest message, or an RRC inter node message therein. The T-MN that receives the message may include (or append) an SCPAC release indicator when generating (or writing) the HO command message. That is, in this case, the MN has determined to remove the SCPAC configuration.

Unlike this, the T-MN may determine to perform release by itself. If the HO request message received by the T-MN is from a gNB different that of the T-MN, the T-MN may recognize the corresponding HO is inter-MN HO and accordingly, may determine to remove the SCPAC configuration and may directly add (or append) the SCPAC release indicator.

When performing the above operation, the operation according to Opt 1 and Opt 2 may be as follows. In initially, in the case of Opt 1, the conditional reconfiguration field of the HO command may include configuration of removing condition information associated with the SCPAC configuration mentioned in Opt 1, that is, components of measurement configuration in measurement configuration to be applied in the target PSCell along with adding or (appending) the release indicator. In the case of Opt 2, the corresponding release indicator may be included in the HO command, or may be configured outside the conditional reconfiguration field.

The HO command generated (or made) in this manner may be transmitted to the S-MN. Then, the S-MN may transmit the HO command to the UE. More specifically, the T-MN may transmit, to the S-MN, a HO request acknowledgement message that includes the HO command. Then, the S-MN may transmit, to the UE, the RRCReconfiguration message that includes the HO command.

In the operation in which the UE applies the received HO command, stages of FIG. 8 may be applied. In a stage of applying cond Reconfiguration, Opt 1may delete (or remove) the entry of all SCPAC config according to the release indicator, or may delete (or remove) the entry corresponding to the condReconfig Id indicated by the release indicator. Additionally, components of measConfig corresponding to conditions associated with the entry may be deleted (or removed) in a subsequent measConfig application stage.

In the case of Opt 2, since the existing conditional reconfiguration performing procedure is absent, a new procedure may be added. In possible order, it may be performed instead of the conditional reconfiguration procedure. Alternatively, it may be added (or included) before or at the very end, that is, after the stage of removing all the entries excluding the entry associated with the SCPAC configuration on varCondReconfig of the MCG/SCG.

In the case of Opt 1, the UE that receives the HO command may delete (or remove) SCPAC configuration information within the corresponding conditional reconfiguration, and may also remove a meas configuration component associated with SCPAC config according to the given measurement configuration.

In the case of Opt 2, the UE may delete (or remove) SCPAC configuration according to the release indicator. Also, the UE may delete the meas configuration component associated with the SCPAC config without separate measurement configuration indication.

After the operation, the UE may perform a random access while moving to the target PCell. (RACH operation)

After receiving a UL grant from the corresponding target cell, the UE may terminate a handover procedure (or complete HO) while transmitting the RRCReconfigurationComplete message to the target cell.

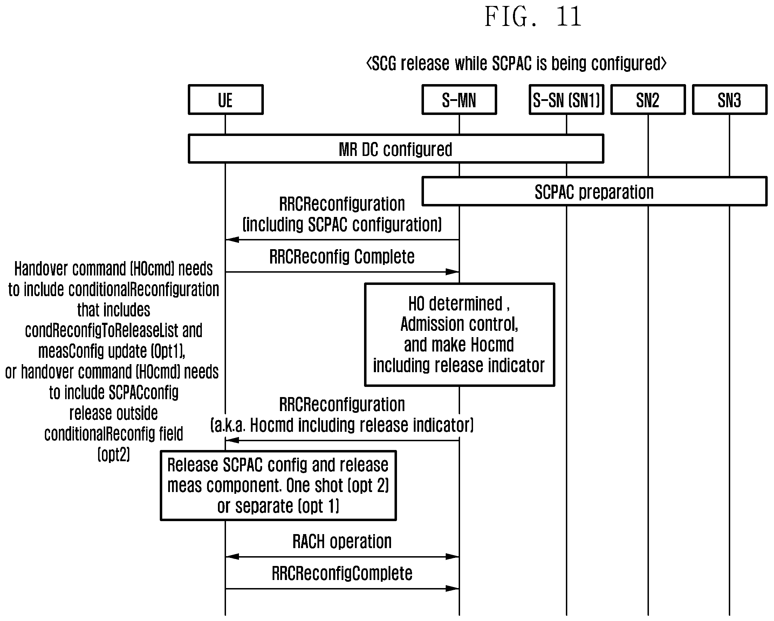

FIG. 11 is a flowchart illustrating a procedure of releasing subsequent conditional PSCell addition and change (SCPAC) configuration of a PCell handover procedure of an intra master node (MN) according to an embodiment of the disclosure.

More specifically, FIG. 11 is to describe a PCell handover of an intra-master node (intra-MN). In the case of the PCell handover of the intra-master node (intra-MN), a source-master node (S-MN) may make a decision by itself and, if necessary, may generate a HO command by adding (or appending) the release indicator of Opt 1 and/or Opt2, and may transmit the same to the UE.

With reference to FIG. 11, initially, the UE may be in a dual connection (or dual connectivity (DC)) situation with a source-master node (S-MN) and a source-secondary node (S-SN) (MR DC configured). In a situation in which the UE is constituting the dual connection with an MN and an SN of the base station, the UE may perform subsequent conditional PSCell addition and change (SCPAC) preparation.

The SCPAC preparation may include the following.

The SN (e.g., SN1) may request resource allocation for SCPAC from another SN (, which may be referred to as "candidate SN," e.g., SN2, SN3, ...). To this end, the S-SN may transmit necessary information to the MN. The information may include information indicating proposed candidate PSCells for the respective candidate SNs, measurement result information on the corresponding PSCell, and initial condition information for moving from a current PSCell of the SN to the candidate PSCells.

The MN may receive the information from the S-SN, and may transmit the information by applying an SNAddition procedure for each candidate SN.

Each candidate SN may transmit the proposed candidate PSCell given to the candidate SN and measurement result information of the corresponding cell, and may also transmit proposed candidate PSCell information on other candidate SNs.

Each candidate SN that receives this information may determine a PSCell to which SCPAC resources are to be allocated among its proposed PSCells, and may include information of the corresponding cell in an SNADDReqACK message to transmit the same to the MN. Also, condition information to be used when moving from the determined PSCell to at least one another candidate PSCell may also be transmitted.

The MN that receives the information may link to target configuration and condition information required when moving from the corresponding target cell to another SCPAC candidate cell for the determined at least one PSCell, and may transmit the same to the UE as SCPAC configuration.

The series of procedures may be viewed as the SCPAC preparation.

Then, the S-MN may transmit the SCPAC configuration to the UE through an RRCReconfiguration message. More specifically, the S-MN may transmit, to the UE, the RRCReconfiguration message that includes the SCPAC configuration, and the UE may transmit an RRCReconfigurationComplete message to the S-MN.

After receiving the SCPAC configuration, the UE may perform a measurement and condition evaluation operation. Then, when a specific condition is satisfied, the UE may perform movement to the corresponding candidate PSCell.

Here, the SCPAC configuration may be maintained in the UE as is. Even after moving to the PSCell, the UE may continuously perform the SCPAC operation using the necessary condition information and target cell configuration information within the same SCPAC configuration.

Then, the S-MN may determine handover (HO) (HO determined).

The S-MN may generate a handover command that includes a release indicator.

When performing the above operation, the operation according to Opt 1 and Opt 2 may be as follows. In initially, in the case of Opt 1, the conditional reconfiguration field of the HO command may include configuration of removing condition information associated with the SCPAC configuration mentioned in Opt 1, that is, components of measurement configuration in measurement configuration to be applied in the target PSCell along with adding or (appending) the release indicator. In the case of Opt 2, the corresponding release indicator may be included in the HO command, or may be configured outside the conditional reconfiguration field.

Then, the S-MN may transmit, to the UE, the HO command that includes the release indicator.

In the operation in which the UE applies the received HO command, stages of FIG. 8 may be applied. In a stage of applying cond Reconfiguration, Opt 1may delete (or remove) the entry of all SCPAC config according to the release indicator, or may delete (or remove) the entry corresponding to the condReconfig Id indicated by the release indicator. Additionally, components of measConfig corresponding to conditions associated with the entry may be deleted (or removed) in a subsequent measConfig application stage.

In the case of Opt 2, since the existing conditional reconfiguration performing procedure is absent, a new procedure may be added. In possible order, it may be performed instead of the conditional reconfiguration procedure. Alternatively, it may be added (or included) before or at the very end, that is, after the stage of removing all the entries excluding the entry associated with the SCPAC configuration on varCondReconfig of the MCG/SCG.

In the case of Opt 1, the UE that receives the HO command may delete (or remove) SCPAC configuration information within the corresponding conditional reconfiguration, and may also remove a meas configuration component associated with SCPAC config according to the given measurement configuration.

In the case of Opt 2, the UE may delete (or remove) SCPAC configuration according to the release indicator. Also, the UE may delete the meas configuration component associated with the SCPAC config without separate measurement configuration indication.

After the operation, the UE may perform a random access while moving to a PCell of the intra-master node (intra-MN) (RACH operation).

After receiving a UL grant from the corresponding target cell, the UE may terminate a handover procedure (or complete HO) while transmitting the RRCReconfigurationComplete message to the target cell of the intra-master node (intra-MN).

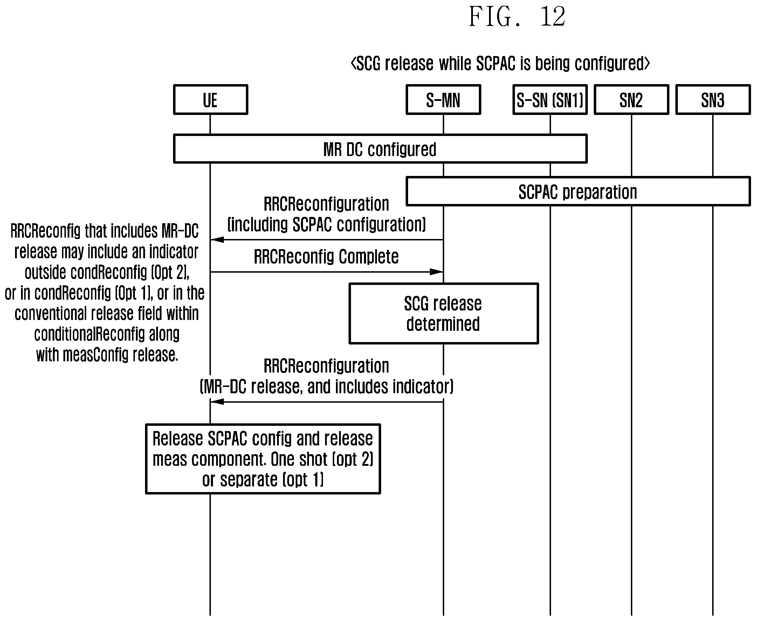

FIG. 12 is a flowchart illustrating a procedure of releasing subsequent conditional PSCell addition and change (SCPAC) configuration in secondary cell group (SCG) release according to an embodiment of the disclosure.

In the case of secondary cell group (SCG) release, subsequent conditional PSCell addition and change (SCPAC) configuration may be required even in a situation in which an SCG is absent. For example, the UE may perform conditional PSCell addition (CPA). Here, the SCPAC configuration may be used. For this case, the UE may need to maintain (or leave) the corresponding configuration. Hereinafter, it is described in detail.

With reference to FIG. 12, initially, the UE may be in a dual connection (or dual connectivity) (DC) situation with a source-master node (S-MN) and a source-secondary node (S-SN) (MR DC configured). In a situation in which the UE is constituting the dual connection with an MN and an SN of the base station, the UE may perform subsequent conditional PSCell addition and change (SCPAC) preparation.

The SCPAC preparation may include the following.

The SN (e.g., SN1) may request resource allocation for SCPAC from another SN (, which may be referred to as "candidate SN," e.g., SN2, SN3, ...). To this end, the S-SN may transmit necessary information to the MN. The information may include information indicating proposed candidate PSCells for the respective candidate SNs, measurement result information on the corresponding PSCell, and initial condition information for moving from a current PSCell of the SN to the candidate PSCells.

The MN may receive the information from the S-SN, and may transmit the information by applying an SNAddition procedure for each candidate SN.

Each candidate SN may transmit the proposed candidate PSCell given to the candidate SN and measurement result information of the corresponding cell, and may also transmit proposed candidate PSCell information on other candidate SNs.

Each candidate SN that receives this information may determine a PSCell to which SCPAC resources are to be allocated among its proposed PSCells, and may include information of the corresponding cell in an SNADDReqACK message to transmit the same to the MN. Also, condition information to be used when moving from the determined to at least one another candidate PSCell may also be transmitted.

The MN that receives the information may link to target configuration and condition information required when moving from the corresponding target cell to another SCPAC candidate cell for the determined at least one PSCell, and may transmit the same to the UE as SCPAC configuration.

The series of procedures may be viewed as the SCPAC preparation.

Then, the S-MN may transmit the SCPAC configuration to the UE through an RRCReconfiguration message. More specifically, the S-MN may transmit, to the UE, the RRCReconfiguration message that includes the SCPAC configuration, and the UE may transmit an RRCReconfigurationCompletemessage to the S-MN.

After receiving the SCPAC configuration, the UE may perform a measurement and condition evaluation operation. Then, when a specific condition is satisfied, the UE may perform movement to the corresponding candidate PSCell.

Here, the SCPAC configuration may be maintained in the UE as is. Even after moving to the PSCell, the UE may continuously perform the SCPAC operation using the necessary condition information and target cell configuration information within the same SCPAC configuration.

Then, the S-MN may determine release of the secondary cell group (SCG) (SCG release determine).

The S-MN may transmit, to the UE, the RRCReconfiguration message including an indicator that indicates MR-DC release and SCPAC release. More specifically, the MN may transmit the release indicator to the UE by including the same in RRCReconfiguration that includes the SCG release indicator (or MR-DC release indicator) using the method of Opt 1 or Opt 2. In this case, since there is currently no restriction on whether the conditional reconfiguration message may be included in the RRCReconfiguration message that indicates SCG release, there is no need to consider separate network configuration restrictions in the case of Opt 1.

If the UE receives the RRCReconfiguration message indicating the SCG release, the UE may operate in the following order.
- In SCG meas configuration, SCG measurement configuration excluding measId, reportconfiguration, and the measurement object specified by conditions in the SCPAC may be deleted (or removed).
- In the conditionalReconfig variable of the SCG, all the entries excluding condReconfig entries associated with the SCPAC configuration may be deleted (or removed).
- In the conditionalReconfiguration variable of the MCG, all the entries excluding condReconfig entries associated with the SCPAC configuration from among among cond Reconfiguration entries that do not include reconfigurationWithSync of MCG part configuration may be deleted (or removed).

In the case of Opt 1, the release method of Opt 1 among the above-described SCPAC configuration removal methods may be performed in the conditional reconfiguration application operation of FIG. 8. Then, the above operation may be performed.

In the case of Opt 2, the condReconfig entry associated with the SCPAC configuration needs to be able to be (additionally) removed depending on decision of the network after or before the above operations.

In the case of normal PSCell change, according to a current running CR, all entries on the conditional Reconfig variable excluding the SCPAC configuration-associated entry in the master cell group (MCG) and/or secondary cell group (SCG) may be removed, and reportconfig, measurement object, and measId information used for the condition corresponding to the entry may be deleted (or is to be removed) from the measurement configuration variable.

Therefore, when the reconfigurationWithSync is included in SCG cell group configuration, (and when conditional PSCell addition (CPA)/conditional PScell change (CPC)/SCPAC configuration is previously configured, the message may be transmitted to the UE by including release using the method of Opt 1/Opt 2.

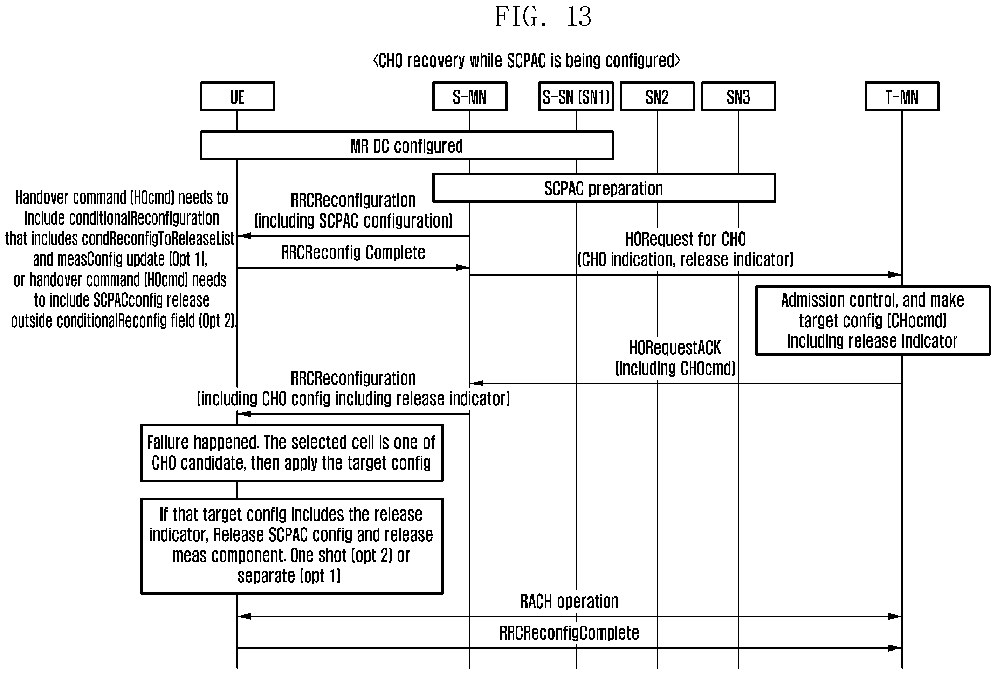

FIG. 13 is a flowchart illustrating a procedure of releasing subsequent conditional PSCell addition and change (SCPAC) configuration in a conditional handover (CHO) recovery procedure according to an embodiment of the disclosure.

In the case of conditional handover (CHO) recovery, the basic operation is similar to PCell change.

However, the difference from the PCell change is as follows. In a CHO preparation process for a CHO candidate cell, in the case of inter-MN CHO in consideration of whether it is inter-MN CHO of a CHO target cell, a release indicator may be included and transmitted to the corresponding target MN. Here, a CHO preparation/initiation indicator may be delivered using a HO Request message along with an SCPAC release indicator. In the same manner as the method of Opt 1, 2, an Id of cond Reconfig entry associated with SCPAC config to be specifically removed may be included in the HO request message along with the release indicator.

The detailed operation proposed in the disclosure is as follows.

Initially, the UE may be in a dual connection (or dual connectivity (DC)) situation with a source-master node (S-MN) and a source-secondary node (S-SN) (MR DC configured). In a situation in which the UE is constituting the dual connection with an MN and an SN of the base station, the UE may perform subsequent conditional PSCell addition and change (SCPAC) preparation.

The SCPAC preparation may include the following.

The SN (e.g., SN1) may request resource allocation for SCPAC from another SN (, which may be referred to as "candidate SN," e.g., SN2, SN3, ...). To this end, the S-SN may transmit necessary information to the MN. The necessary information may include information indicating proposed candidate PSCells for the respective candidate SNs, measurement result information on the corresponding PSCell, and initial condition information for moving from a current PSCell of the SN to the candidate PSCells.

The MN may receive the information from the S-SN, and may transmit the information by applying an SNAddition procedure for each candidate SN.

Each candidate SN may transmit the proposed candidate PSCell given to the candidate SN and measurement result information of the corresponding cell, and may also transmit proposed candidate PSCell information on other candidate SNs.

Each candidate SN that receives this information may determine a PSCell to which SCPAC resources are to be allocated among its proposed PSCells, and may include information of the corresponding cell in an SNADDReqACK message to transmit the same to the MN. Also, condition information to be used when moving from the determined PSCell to at least one another candidate PSCell may also be transmitted.

The MN that receives the information may link to target configuration and condition information required when moving from the corresponding target cell to another SCPAC candidate cell for the determined at least one PSCell, and may transmit the same to the UE as SCPAC configuration.

The series of procedures may be viewed as the SCPAC preparation.

Then, the S-MN may transmit the SCPAC configuration to the UE through an RRCReconfiguration message. More specifically, the S-MN may transmit, to the UE, the RRCReconfiguration message that includes the SCPAC configuration, and the UE may transmit an RRCReconfigurationComplete message to the S-MN.

After receiving the SCPAC configuration, the UE may perform a measurement and condition evaluation operation. Then, when a specific condition is satisfied, the UE may perform movement to the corresponding candidate PSCell.

Here, the SCPAC configuration may be maintained in the UE as is. Even after moving to the PSCell, the UE may continuously perform the SCPAC operation using the necessary condition information and target cell configuration information within the same SCPAC configuration.

Then, the S-MN may determine handover (HO) to a specific target PCell of a target-master node (T-MN) (HO determined).

The S-MN may transmit a HO request message to the T-MN. More specifically, as the handover preparation, the S-MN may transmit the HO request message to the T-MN.

Here, a CHO preparation/initiation indicator may be delivered using the HO Request message along with an SCPAC release indicator. In the same manner as the method of Opt 1, 2, an Id of cond Reconfig entry associated with SCPAC config to be specifically removed may be included in the HO request message along with the release indicator.

More specifically, the operation according to Opt 1 and Opt 2 may be as follows. Initially, in the case of Opt 1, the conditional reconfiguration field of the HO request may include configuration of removing condition information associated with the SCPAC configuration mentioned in Opt 1, that is, components of measurement configuration in measurement configuration to be applied in the target PSCell along with adding (or appending) the release indicator. In the case of Opt 2, the corresponding release indicator may be included in the HO command, or may be configured outside the conditional reconfiguration field.

The T-MN that receives the HO Request may perform admission control, and may generate a CHO command that includes a release indicator. The CHO command may be the same as target configuration, and may be transmitted to the UE.

The CHO command generated (or made) in this manner may be transmitted to the S-MN. Then, the S-MN may transmit the CHO command to the UE. More specifically, the T-MN may transmit, to the S-MN, a HO request acknowledgement message that includes the CHO command. Then, the S-MN may transmit, to the UE, an RRCReconfiguration message that includes the CHO command.

The UE that receives CHO configuration including the information may store configuration of the corresponding CHO. Also, the UE may perform measurement and evaluation for condition information included in the configuration. Here, the CHO configuration may be the same as target configuration of the CHO, which may be the same as the CHO command. The release indicator indicates a release indicator of the SCPAC indicator, and may be included in the CHO configuration or the CHO command in the embodiment.

If failure occurs on the MCG (Failure happened), and a selected cell is one of CHO candidate cells after cell selection, the UE may remove SCPAC configuration associated condReconfig entry in response to Opt 1,2 while performing CHO to the corresponding cell.

More specifically, if the target configuration includes the release indicator, the UE may delete (or remove) the entry of all SCPAC config according to the release indicator, or may delete (or remove) the entry corresponding to the condReconfig Id indicated by the release indicator. Additionally, components of measConfig corresponding to the condition associated with the entry may be deleted (or removed) in a measConfig application stage.

In the case of Opt 1, the UE that receives the CHO command may delete (or remove) SCPAC configuration information within the corresponding conditional reconfiguration, and may also remove the meas configuration component associated with the SCPAC config according to the given measurement configuration.

In the case of Opt 2, the UE may view the release indicator and may delete (or remove) the SCPAC configuration. Also, the UE may remove the meas configuration component associated with SCPAC config without separate measurement configuration indication.

After performing the operation, the UE may perform a random access while performing movement to the T-MN (RACH operation).

After receiving a UL grant from the corresponding T-MN, the UE may terminate a conditional handover procedure (or complete a CHO) while transmitting the RRCReconfigurationComplete message to the target cell.

According to another embodiment of the disclosure, the RRCReconfiguration message of the T-MN in the case of the failure, that is, a target cell configuration message (RRCReconfiguration) of a corresponding cell when the UE selects a candidate cell of CHO during cell selection may not include separate release indicators of SCPAC configuration and associated measurement components. In this case, the UE may directly perform an operation of excluding the remaining conditional reconfiguration configuration entries excluding SCPAC configuration from the MCG and/or SCG variable.

More specifically, the UE may experience various types of MCG failures and may perform an RRC reestablishment operation. In this case, if a recovery indicator using CHO is configured, the UE may perform cell selection, and if the corresponding cell is one of current CHO candidate cells of the UE, the UE may perform an operation of applying configuration of the corresponding candidate cell. Here, among conditional reconfiguration entries (cond Reconfig Id, target spcell configuration, condition information applied when moving to corresponding target cell, SCPAC configuration) stored in the conditional reconfiguration UE variable of the UE's MCG and/or SCG, entries that do not include the SCPAC configuration may be deleted (or removed) in bulk. Then, the entry indicated by a separate Id may be separately deleted (or removed) using the method of Opt 1 and/or Opt 2. This Id may be transmitted to the UE by including an ID of SCPAC configuration associated condReconfig entry that the network desires to delete (or remove).

According to another embodiment of the disclosure, there may be something related to update of securityCellSetId in a situation of normal PSCell change.

When performing SCPAC configuration, the MN may pre-generate a plurality of sk-counter values and security key values corresponding thereto for each SN of SCPAC candidate cells, and may deliver a value for each securityCellSetID to all SNs. Also, a counter value list for each SecurityCellSetID may be set to the UE. A single securityCellSetID may be assigned for each SCPAC candidate cell configuration, and the same ID value is assigned for each SN. Whenever the UE performs SCPAC, the UE may compare securityCellSetId of a current PSCell and securityCellSetID of a target PSCell and, if they are not the same as a comparison result, may select a first counter value associated with securityCellSetID of the target PSCell as a new counter value. Then, the security key is updated based on the corresponding counter value. In this configuration situation, when the network desires to indicate the normal PSCell change, there may be the following three cases.

More specifically, there may be (Case 1) a case in which the target PSCell is not a PSCell that is served by an SN with current SCPAC configuration (SPCAC candidate SN), (Case 2) a case in which the target PSCell is served by the SN with current SCPAC configuration, but is not one of SCPAC candidate cells, and (Case 3) a case in which the target PSCell is served by the SN with current SCPAC configuration and is also one of SCPAC candidate cells.

If only normal PSCell change to one of SCPAC candidate cells is possible, that is, if the network has implementation constraints such that a target of the normal PSCell change may be changed (or transmitted) to one of the SCPAC candidate cells at all times, the above-described Case 1 and Case 2 do not occur. In this case, an update method of servingSecurityCellSetID may be transmitted (or signaled) to the UE in such a manner that the network explicitly includes a securityCellSetId value assigned to an SN belonging to the corresponding target PSCell in a servingSecurityCellSetID field of a normal PSCell change command (i.e., when RRCReconfiguration message in MN format includes reconfigurationwithsync field in SCG configuration). The UE that receives the signal may compare the corresponding servingSecurityCellSetID and currently maintained servingSecurityCellSetID, and, if they are different as a comparison result, may update the servingSecurityCellSetID variable with the received ID value. Also, the UE may select the first counter value from the counter-security key list associated with the corresponding ID value, and may update and use a security parameter using the selected counter value.

If there is no restriction on the target PSCell of the normal PSCell change, Case 1, Case 2, and Case 3 may all occur, and the operation of each case is described.

For Case 1, the network may include a new sk-counter value in a normal PSCell change command. This case indicates the sk-counter field of the shallowest level of RRCReconfiguration, not the conditional reconfiguration field. The UE that receives the counter value may update a security key using the corresponding value. Also, the UE may release SCPAC configuration. Here, the release of SCPAC configuration may be performed by the UE itsel, or may be performed through a release indicator in the conditional reconfiguration field of the normal PSCell change.

Case 2. The network may transmit a securityCellSetID value assigned to the SN of the corresponding target PSCell through servingSecurityCellSetID in the normal PSCell change command, or may include a new counter value in the shallowest field. When the UE receives the new counter value, the UE may use the corresponding value as a new counter and may perform security update. Also, the UE may remove the SCPAC configuration. The release may be performed by the UE itself, or may be performed through the release indicator in the conditional reconfiguration field of the normal PSCell change.

In the case of receiving servingSecurityCellSetID, it may be compared with currently stored servingSecurityCellSetID. If they are the same as a comparison result, the UE may use the current counter value and security key as is. If they are not the same as a comparison result, the UE may update the corresponding ID in servingSecurityCellSetID, may use the first value in the list of associated counter values as a new counter, and may perform security update. Also, the UE may release the SCPAC configuration. Here, the release may be performed by the UE itself, or may be performed through the release indictor in the conditional reconfiguration field of the normal PSCell change.

If neither the new counter value nor securityCellSetID is received in the normal PSCell change command, the UE uses the current counter value as is and maintains the currently stored servingSecurityCellSetId as is.

In the normal PSCell command, the conditional reconfiguration field includes an indicator for removing SCPAC configuration and/or servingSecurityCellSetID of the target PSCell. For the above operations, although the reconfigurationWithSync field is included in the normal PSCell change command, that is, the secondary cell group of the RRCReconfiguration message in the MN format, the conditional reconfiguration field may be included in the RRCReconfiguration message.

For Case 3, the following options are possible.

Opt 1. The network does not signal the counter value in the shallowest field of the normal PSCell change command, and may include (or insert), in servingSecurityCellSetID, and deliver a securityCellSetID value assigned to the SN of the corresponding target PSCell. In this case, the UE may compare the received ID value and the existing stored servingSecurityCellSetID. If they are the same as a comparison result, the UE uses the counter value that is currently being used , and does not perform separate security key update. If the received ID value and the existing stored servingSecurityCellSetID are not the same as a comparison result, the UE may update the stored ID with the received ID. Also, the UE performs security key update by using the counter value associated with the corresponding ID as sk-counter.

If the normal PSCell change command includes SCPAC performance conditions from the target PSCell /or to the target PSCell and is transmitted to the UE, the UE may maintain the SCPAC configuration as is. However, if the SCPAC performance conditions from the target PSCell /or to the target PSCell are not included and transmitted (or if the SCPAC performance conditions from the target PSCell /or to the target PSCell are not transmitted to the UE), the UE may release the SCPAC configuration. The release may be performed by the UE itself, or may be performed through the release indicator in the conditional reconfiguration field of the normal PSCell change. In the above option, when there is no counter value in the shallowest field and there is no separate value even in servingSecurityCellSetID, the UE may use the counter value that is currently being used as is, and may have no need to update servingSecurityCellSetID. In this case, the UE may maintain SCPAC configuration as is.

Opt 2. The network may signal the new counter value in the shallowest field of RRCReconfiguration in the normal PSCell change command. This value may be one of values assigned for each SN of each of the existing SCPAC candidate cells. The UE that receives this value may perform security update using the corresponding counter value. The UE may find securityCellSetID that includes the counter value (, which may be the very first value), and may newly store the corresponding ID as servingSecurityCellSetID. If the normal PSCell change command includes SCPAC performance conditions from the target PSCell/or to the target PSCell and is transmitted to the UE, the UE may maintain the SCPAC configuration as is. However, if the normal PSCell change command does not include the SCPAC performance conditions from the target PSCell/or to the target PSCell and is not transmitted (or if the SCPAC performance condition from the target PSCell/or to the target PSCell are not delivered to the UE), the UE may release the SCPAC configuration. The release may be performed by the UE itself, or may be performed through the release indicator in the conditional reconfiguration field of the normal PSCell change.

Case 1, Case 2, and Case 3 described above may be partially allowed, or all allowed. In each case, the network and the UE may perform the operation corresponding to the corresponding case.

The methods according to the embodiments described in the claims or specification of the present invention may be implemented in the form of hardware, software, or combination of hardware and software.

When implemented in software, a computer-readable storage medium storing one or more programs (software modules) may be provided. The one or more programs stored in the computer-readable storage medium may be configured for execution by one or more processors within an electronic device. The one or more programs may include instructions that cause the electronic device to execute the methods according to the embodiments described in the claims or specification of the present invention.

Such a program (software module, software) may be stored in a random access memory (RAM), a nonvolatile memory including a flash memory, a read only memory (ROM), an electrically removable programmable read only memory (EEPROM), a magnetic disc storage device, a compact disc-ROM (CD-ROM), digital versatile discs (DVDs), other types of optical storage devices, or a magnetic cassette. Alternatively, such a program may be stored in a memory configured with the combination of some or all of them. Also, a plurality of component memories may be included.

Also, the program may be stored in an attachable storage device that may be accessed through a communication network, such as the Internet, an intranet, a local area network (LAN), a wide area network (WAN), or a storage area network (SAN), or through a communication network configured with the combination thereof. Such a storage device may access a device that carries out an embodiment of the present invention through an external port. Also, a separate storage device on the communication network may access the device that carries out an embodiment of the present invention.

In detailed embodiments of the present invention described above, a component included in the present invention is expressed in a singular or plural form depending on the presented detailed embodiments. However, the singular or plural expression is selected to be suitable for a presented situation for convenience of description. The present invention is not limited to a singular component or a plurality of components. Even a component expressed in the plural form may be configured to be singular, or a component expressed in the singular form may be configured to be plural.

Meanwhile, although specific embodiments have been described in the detailed description of the present invention, various modifications may be made without departing from the scope of the present invention. Therefore, the scope of the present invention should not be limited to the described embodiments and should be defined by the claims and equivalents thereof.

## Claims

1. A method performed by a user equipment (UE) in a wireless communication system, the method comprising:
receiving, from a base station associated with a source cell, first conditional reconfiguration information including subsequent conditional primary secondary cell group (SCG) cell (PSCell) addition or change (SCPAC) configuration information;
in case that the UE receives a message for a cell change including second conditional reconfiguration information associated with a release of the SCPAC configuration information, deleting the stored SCPAC configuration information based on the second conditional reconfiguration information associated with the release of the SCPAC configuration information; and
performing the cell change to a target cell based on the message for the cell change.

2. The method of claim 1, wherein the message for the cell change is a radio resource control (RRC) reconfiguration message including a reconfiguration with sync field associated with a master cell group (MCG) or an RRC reconfiguration message including a reconfiguration with sync field associated with an SCG.

3. The method of claim 1, wherein:
the SCPAC configuration information includes a cell identifier (ID) of a candidate cell to which the SCPAC configuration information is applied and condition information for performing an SCPAC operation with the candidate cell, and
the second conditional reconfiguration information associated with the release of the SCPAC configuration information includes the ID of the candidate cell to which the SCPAC configuration information is applied.

4. The method of claim 1,
wherein when the UE receives a message associated with the release of the SCG, the UE deletes the first conditional reconfiguration information excluding the SCPAC configuration information.

5. A method performed by a base station associated with a source cell in a wireless communication system, the method comprising:
transmitting, to a user equipment (UE), first conditional reconfiguration information including subsequent conditional primary secondary cell group (SCG) cell (PSCell) addition or change (SCPAC) configuration information;
determining whether to perform a cell change; and
in case that the cell change is determined, transmitting, to the UE, a message for the cell change including second conditional reconfiguration information associated with a release of the SCPAC configuration information.

6. The method of claim 5, wherein the message for the cell change is a radio resource control (RRC) reconfiguration message including a reconfiguration with sync field associated with a master cell group (MCG) and an RRC reconfiguration message including a reconfiguration with sync field associated with an SCG.

7. The method of claim 5, wherein:
the SCPAC configuration information includes a cell identifier (ID) of a candidate cell to which the SCPAC configuration information is applied and condition information for performing an SCPAC operation with the candidate cell, and
the second conditional reconfiguration information associated with the release of the SCPAC configuration information includes the ID of the candidate cell to which the SCPAC configuration information is applied.

8. The method of claim 5, wherein:
when release of the SCG of the US is determined, transmitting a message associated with the release of the SCG is included, and
the message associated with the release of the SCG is associated with deleting the first conditional reconfiguration information excluding the SCPAC configuration information.

9. A user equipment (UE) in a wireless communication system, the UE comprising:
a transceiver configured to transmit and receive signals; and
a controller,
wherein the controller is configured to,
receive, from a base station associated with a source cell, first conditional reconfiguration information that including subsequent conditional primary secondary cell group (SCG) cell (PSCell) addition or change (SCPAC) configuration information,
in case that the UE receives a message for a cell change including second conditional reconfiguration information associated with a release of the SCPAC configuration information, delete the stored SCPAC configuration information based on the second conditional reconfiguration information associated with the release of the SCPAC configuration information, and
perform the cell change to a target cell based on the message for the cell change.

10. The UE of claim 9, wherein the message for the cell change is a radio resource control (RRC) reconfiguration message that including a reconfiguration with sync field associated with a master cell group (MCG) or an RRC reconfiguration message including a reconfiguration with sync field associated with an SCG.

11. The UE of claim 9, wherein:
the SCPAC configuration information includes a cell identifier (ID) of a candidate cell to which the SCPAC configuration information is applied and condition information for performing an SCPAC operation with the candidate cell, and
the second conditional reconfiguration information associated with the release of the SCPAC configuration information includes the ID of the candidate cell to which the SCPAC configuration information is applied.

12. The UE of claim 11, wherein, the controller is configured to, when the UE receives a message associated with the release of the SCG, delete the first conditional reconfiguration information excluding the SCPAC configuration information.

13. A base station assocated with a source cell in a wireless communication system, the base station comprising:
a transceiver configured to transmit and receive signals; and
a controller,
wherein the controller is configured to,
transmit, to a user equipment (UE), first conditional reconfiguration information including subsequent conditional primary secondary cell group (SCG) cell (PSCell) addition or change (SCPAC) configuration information,
determine whether to perform a cell change, and
in case that the cell change is determined, transmit, to the UE, a message for the cell change including second conditional reconfiguration information associated with a release of the SCPAC configuration information.

14. The base station of claim 13, wherein:
the message for the cell change is a radio resource control (RRC) reconfiguration message including a reconfiguration with sync field associated with a master cell group (MCG) or an RRC reconfiguration message including a reconfiguration with sync field associated with an SCG,
the SCPAC configuration information includes a cell identifier (D) of a candidate cell to which the SCPAC configuration information is applied and condition information for performing an SCPAC operation with the candidate cell, and
the second conditional reconfiguration information associated with the release of the SCPAC configuration information includes the ID of the candidate cell to which the SCPAC configuration information is applied.

15. The base station of claim 13, wherein the controller is configured to,
when release of the SCG of the UE is determined, transmit a message associated with the release of the SCG, and
the message associated with the release of the SCG is associated with deleting the first conditional reconfiguration information excluding the SCPAC configuration information.
